# EUROPEAN PATENT APPLICATION

(11) **EP 4 796 330 A1**
(43) Date of publication of application: **26.08.2026**
(21) Application number: 26158927.9
(22) Date of filing: 17.02.2026
(51) Int. Cl.: B41J 2/18, B41J 2/19, B41J 11/00, C09D 11/322, C09D 11/38

(54) **INK JET RECORDING METHOD, INK JET RECORDING APPARATUS AND AQUEOUS INK**

(30) Priority: 20.02.2025 JP 2025025598; 28.01.2026 JP 2026011915
(71) Applicant: Canon Kabushiki Kaisha, Tokyo 146-8501 (JP)
(72) Inventor: TAKEBAYASHI, Satoshi, Tokyo (JP); NAGASHIMA, Sayoko, Tokyo (JP)
(74) Representative: WESER & Kollegen Patentanwälte PartmbB

(57) **Abstract**

An ink jet recording method using an ink jet recording apparatus includes a recording head (1), the recording head including: an ejection orifice (13) configured to eject an aqueous ink including resin particles; a pressure chamber (12) communicating the ejection orifice; an ejection element arranged in the pressure chamber; a liquid retention chamber configured to supply the aqueous ink to the pressure chamber; a bubble retention chamber (520) communicating to the liquid retention chamber; a decompression chamber (760) arranged adjacent to the bubble retention chamber; and a gas permeable membrane (710) arranged at a boundary between the bubble retention chamber and the decompression chamber, the method including: applying the aqueous ink to a recording medium (P); and then heating the recording medium. T_{g} (°C) of the resin particle, Tᵢ (°C) of the aqueous ink in the bubble retention chamber and T_{fix} (°C) of the recording medium satisfy Tᵢ<T_{g}≤T_{fix}.

## Description

### TECHNICAL FIELD

The present disclosure relates to an ink jet recording method, an ink jet recording apparatus and an aqueous ink.

### BACKGROUND

An ink jet recording apparatus enables the recording of an image having high definition, such as a photograph, a document or a poster, by ejecting a fine droplet from an ejection orifice of a recording head to apply the ink to a recording medium. In recent years, an image to be recorded has been required to have characteristics such as abrasion resistance, in addition to high definition. In particular, in applications such as poster printing, wiping with a wet cloth is assumed, and hence water abrasion resistance of an image has also been required. In addition, to record an image having improved water abrasion resistance, an ink blended with a resin particle is used, and an ink jet recording apparatus that heats the recording medium after image recording is used.

When the ink jet recording apparatus is used, a bubble may be mixed into an ink flow path at the time of replacement of an ink storage portion, such as an ink cartridge or an ink storage bag, or a recording head. When the mixed bubble enters a pressure chamber of the recording head, the pressure for ejecting an ink becomes insufficient, and hence ink ejection performance may be influenced. In addition, when the bubble remains in the ink flow path of the recording head, it is also assumed that the remaining bubble may expand depending on a change in external environment, for example, an increase in temperature of an installation environment, causing a phenomenon such as leakage of the ink to be liable to occur. Thus, in order to stably use the recording apparatus and the recording head, it is preferable that the recording head be configured to discharge the bubble having entered therein to the outside.

When the amount of the bubble having entered the inside of the recording head is increased, a suction recovery process involving sucking the bubble through the ejection orifice together with the ink to restore the state is performed. When the amount of the mixed bubble is increased owing to the continuous use or prolonged disuse of the recording apparatus, the suction recovery process is required to be performed a plurality of times. However, the suction recovery process leads to a decrease in productivity along with the occurrence of downtime of recording, and hence it is preferable that the suction recovery process be avoided as much as possible.

As a technology for taking countermeasures against the bubble, there has been proposed a recording apparatus having a deaeration unit including a hollow fiber module arranged in a path for supplying an ink from an ink storage portion to a recording head (Japanese Patent Laid-Open No. 2015-058544 and Japanese Patent Laid-Open No. 2013-223980). Meanwhile, there has been proposed a recording apparatus in which a deaerator including a partition formed of a hollow fiber membrane is incorporated into the inside of a recording head (Japanese Patent Laid-Open No. 2011-173428). In addition, there has been proposed a liquid jetting apparatus in which a gas (bubble) mixed in a liquid is captured in a filter chamber in the middle of an ink flow path, and a gas collecting unit arranged adjacent to the filter chamber via a permeable partition wall is decompressed to collect the gas (Japanese Patent Laid-Open No. 2015-058544 and Japanese Patent Laid-Open No. 2008-173961).

### SUMMARY

The inventors of the present disclosure have investigated the characteristics of the apparatuses proposed in Japanese Patent Laid-Open No. 2015-058544, Japanese Patent Laid-Open No. 2013-223980, Japanese Patent Laid-Open No. 2011-173428 and Japanese Patent Laid-Open No. 2008-173961. In the methods proposed in Japanese Patent Laid-Open No. 2015-058544 and Japanese Patent Laid-Open No. 2013-223980, there have been a problem in that the apparatus is increased in size. In addition, the liquid jetting apparatus proposed in Japanese Patent Laid-Open No. 2011-173428 and Japanese Patent Laid-Open No. 2008-173961, it has been found that, when an ink containing a resin particle is used, a bubble-discharging effect becomes insufficient, and hence an ejection failure is liable to occur.

Accordingly, the present disclosure is directed to providing an ink jet recording method excellent in suction recovery property and ejection stability of an ink even when an ink containing a resin particle is used. The present disclosure is also directed to providing an ink jet recording apparatus and an aqueous ink to be used in the ink jet recording method.

That is, the present disclosure in its first aspect provides an ink jet recording method using an ink jet recording apparatus as specified in claim 1. Optional features are specified in claims 2 to 22. The present disclosure in its second aspect provides an ink jet recording apparatus to be used in the ink jet recording method as specified in claim 23. The present disclosure in its third aspect provides an aqueous ink to be used in the ink jet recording method as specified in claim 24.

According to the present disclosure, the ink jet recording method excellent in suction recovery property and ejection stability of an ink even when an ink containing a resin particle is used can be provided. In addition, according to the present disclosure, the ink jet recording apparatus and the aqueous ink to be used in the ink jet recording method can be provided.

Features of the present disclosure will become apparent from the following description of embodiments with reference to the attached drawings. The following description of embodiments is described by way of example.

### BRIEF DESCRIPTION OF THE DRAWINGS

Fig. 1A is a perspective view for schematically illustrating an ink jet recording apparatus according to one embodiment of the present disclosure.
Fig. 1B is a side view for schematically illustrating the ink jet recording apparatus according to one embodiment of the present disclosure.
Fig. 2 is a view for schematically illustrating an example of a recording unit.
Fig. 3 is a schematic diagram for illustrating an example of a flow path of an ink supply unit.
Fig. 4 is an explanatory schematic diagram for illustrating an example of a bubble extraction decompression operation.
Fig. 5 is an exploded perspective view for illustrating an example of a recording head.
Fig. 6 is a vertical sectional view for illustrating an example of a circulation path.
Fig. 7 is a schematic view for illustrating an example of a bubble extraction unit.
Fig. 8 is a view for schematically illustrating a first configuration example of an ink path.
Fig. 9 is a view for schematically illustrating a first modification example of the circulation path.
Fig. 10 is a view for schematically illustrating a second configuration example of the ink path.
Fig. 11 is a view for schematically illustrating a second modification example of the circulation path.

### DESCRIPTION OF THE EMBODIMENTS

The present disclosure is described in more detail below by way of exemplary embodiments. In the present disclosure, when a compound is a salt, the salt is present as dissociated ions in an ink, but the expression "contain a salt" is used for convenience. In addition, an aqueous ink for ink jet is sometimes referred to simply as "ink". Physical property values are values at a normal temperature (25°C) and a normal pressure (1 atm), unless otherwise stated. The descriptions "(meth)acrylic acid" and "(meth)acrylate" refer to "acrylic acid or methacrylic acid" and "acrylate or methacrylate", respectively.

The inventors have investigated the reason why the bubble-discharging effect became insufficient when the ink containing the resin particle was used. Specifically, first, the inventors have analyzed the recording head in which the bubble-discharging effect became insufficient. As a result, it has been found that the resin particle adhered to the gas permeable membrane to clog minute pores of the membrane, resulting in an insufficient bubble-discharging effect. Further, it has also been found that the situation in which the bubble discharge failure due to the clogging with the resin particle occurs is limited, and the bubble discharge failure is liable to occur when the use of the apparatus is resumed after a long period of inactivity.

The inventors have presumed the reason why the bubble discharge failure is liable to occur when the use of the apparatus is resumed after a long period of inactivity to be as described below. To record an image having improved abrasion resistance, it is effective to use an ink containing a relatively large amount of a resin particle. Meanwhile, evaporation of a liquid component in the ink easily proceeds in the bubble retention chamber. For this reason, the resin particle is in a concentrated state near a liquid surface of the ink left to stand still in the bubble retention chamber. It is conceived that, when the use of the apparatus is resumed under this state, the resin particle is liable to be fused along with an increase in temperature, and the minute pores of the gas permeable membrane are clogged to cause the bubble discharge failure.

Next, the inventors have investigated the use of a resin particle having a glass transition temperature T_{g} higher than the temperature of the ink increased along with the use in order to suppress the fusion of the resin particle. As a result, a problem has arisen in that the abrasion resistance of the image decreases, though the clogging of the minute pores of the gas permeable membrane can be sufficiently suppressed. Under such circumstances, the inventors have investigated controlling the glass transition temperature T_{g} (°C) of the resin particle, the maximum temperature Tᵢ (°C) of the ink in the bubble retention chamber and the heating temperature T_{fix} (°C) of the recording medium so as to satisfy the relationship of the following formula (1). As a result, it has been found that the clogging of the minute pores of the gas permeable membrane due to the fusion of the resin particle is suppressed, and the ejection stability of the ink is improved, and the resin particle can be sufficiently fused on the recording medium. Thus, the inventors have reached the present disclosure. ${T}_{i} < {T}_{g} \leq {T}_{fix}$ <Ink Jet Recording Method, Ink Jet Recording Apparatus and Aqueous Ink>

An inkjet recording method of the present disclosure is an inkjet recording method using an ink jet recording apparatus including a predetermined recording head, the ink jet recording method including the steps of applying an aqueous ink ejected from an ejection orifice of the recording head to a recording medium to record an image; and then heating the recording medium. The recording head includes: an ejection orifice configured to eject the aqueous ink; a pressure chamber communicating to the ejection orifice; an ejection element; a liquid retention chamber configured to supply the aqueous ink to the pressure chamber; a bubble retention chamber; a decompression chamber; and a gas permeable membrane arranged at a boundary between the bubble retention chamber and the decompression chamber. The ejection element is a portion that is arranged in the pressure chamber and generates energy for ejecting the aqueous ink from the ejection orifice. The bubble retention chamber is a portion that communicates to the liquid retention chamber and is configured to hold a bubble therein. The decompression chamber is a portion that is arranged adjacent to the bubble retention chamber and is configured to decompress the inside thereof. The aqueous ink includes a resin particle, and the glass transition temperature T_{g} (°C) of the resin particle, the maximum temperature Tᵢ (°C) of the aqueous ink in the bubble retention chamber and the heating temperature T_{fix} (°C) of the recording medium in the above-mentioned step satisfy the relationship of the following formula (1). ${T}_{i} < {T}_{g} \leq {T}_{fix}$

In addition, an ink jet recording apparatus of the present disclosure is an apparatus to be used in an inkjet recording method, the apparatus including a predetermined recording head, the ink jet recording method including the steps of applying an aqueous ink ejected from an ejection orifice of the recording head to a recording medium to record an image; and then heating the recording medium. The recording head includes: an ejection orifice configured to eject the aqueous ink; a pressure chamber communicating to the ejection orifice; an ejection element; a liquid retention chamber configured to supply the aqueous ink to the pressure chamber; a bubble retention chamber; a decompression chamber; and a gas permeable membrane arranged at a boundary between the bubble retention chamber and the decompression chamber. The ejection element is a portion that is arranged in the pressure chamber and generates energy for ejecting the aqueous ink from the ejection orifice. The bubble retention chamber is a portion that communicates to the liquid retention chamber and is configured to hold a bubble therein. The decompression chamber is a portion that is arranged adjacent to the bubble retention chamber and is configured to be decompress the inside thereof. The aqueous ink includes a resin particle, and the glass transition temperature T_{g} (°C) of the resin particle, the maximum temperature Tᵢ (°C) of the aqueous ink in the bubble retention chamber and the heating temperature T_{fix} (°C) of the recording medium in the above-mentioned step satisfy the relationship of the following formula (1). ${T}_{i} < {T}_{g} \leq {T}_{fix}$

Further, an aqueous ink of the present disclosure is an ink to be used in an ink jet recording method using an ink jet recording apparatus including a predetermined recording head, the ink jet recording method including the steps of: applying the aqueous ink ejected from an ejection orifice of the recording head to a recording medium to record an image; and heating the recording medium. The recording head includes: an ejection orifice configured to eject the aqueous ink; a pressure chamber communicating to the ejection orifice; an ejection element; a liquid retention chamber configured to supply the aqueous ink to the pressure chamber; a bubble retention chamber; a decompression chamber; and a gas permeable membrane arranged at a boundary between the bubble retention chamber and the decompression chamber. The ejection element is a portion that is arranged in the pressure chamber and generates energy for ejecting the aqueous ink from the ejection orifice. The bubble retention chamber is a portion that communicates to the liquid retention chamber and is configured to hold a bubble therein. The decompression chamber is a portion that is arranged adjacent to the bubble retention chamber and is configured to be decompress the inside thereof. The aqueous ink includes a resin particle, and the glass transition temperature T_{g} (°C) of the resin particle, the maximum temperature Tᵢ (°C) of the aqueous ink in the bubble retention chamber and the heating temperature T_{fix} (°C) of the recording medium in the above-mentioned step satisfy the relationship of the following formula (1). ${T}_{i} < {T}_{g} \leq {T}_{fix}$

### (Ink Jet Recording Apparatus)

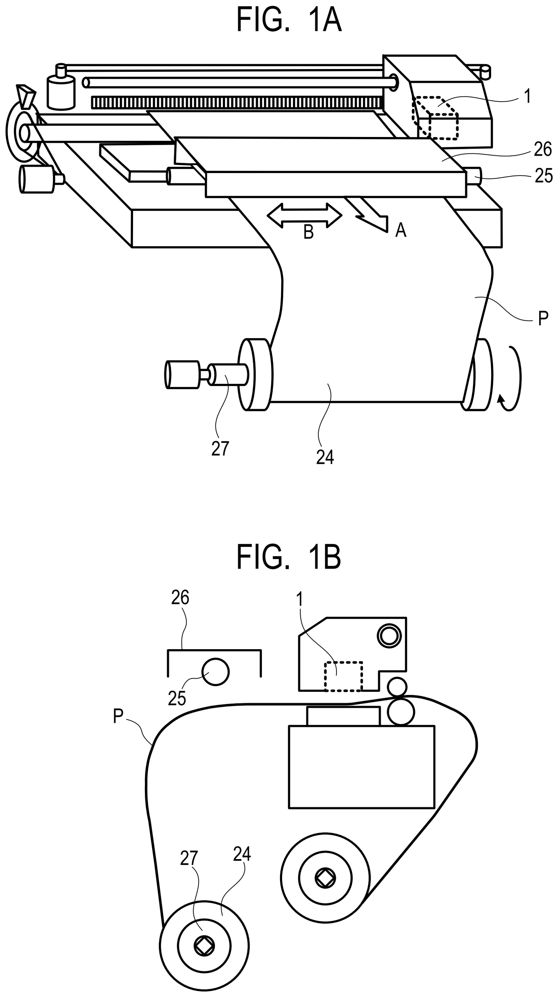

Fig. 1A is a perspective view for schematically illustrating an ink jet recording apparatus according to one embodiment of the present disclosure. Fig. 1B is a side view for schematically illustrating the ink jet recording apparatus according to one embodiment of the present disclosure. As illustrated in Fig. 1A and Fig. 1B, the recording apparatus according to this embodiment includes a recording head 1 of an ink jet system that ejects an ink. Examples of the recording head include a recording head that ejects an ink through the action of mechanical energy and a recording head that ejects an ink through the action of thermal energy. Of those, the recording head that ejects an ink through the action of thermal energy is preferable. The recording head that ejects an ink through the action of thermal energy is a recording head of a thermal system that applies an electric pulse to an electrothermal converting element to impart thermal energy to the ink, to thereby eject the ink from an ejection orifice. The recording head of a thermal system preferably includes a mechanism that heats an aqueous ink ejected from the recording head and applied to the recording medium, to a predetermined temperature (temperature adjustment mechanism). When the temperature adjustment mechanism is incorporated, the heating temperature of the ink ejected from the recording head is preferably set to 35°C or more to 70°C or less.

### [Heating Step]

A recording method of the present disclosure may include a step of heating the recording medium having the ink applied thereto (heating treatment). When the recording medium having the ink applied thereto is heated, drying can be accelerated or image intensity can be enhanced. Examples of a heating unit that heats the recording medium include a known heating unit such as a heater, an air-blowing unit that utilizes airflow such as a dryer and a unit obtained by combining those units. Examples of a method of the heating treatment include a method involving applying heat from an opposite side (back side) of a recording surface (ink application surface) of the recording medium with a heater or the like, a method involving applying warm air or hot air to the recording surface of the recording medium and a method involving heating from the recording surface or the back side with an infrared heater. In addition, a combination of those methods may also be used.

The heating temperature T_{fix} (°C) of the recording medium having the ink applied thereto is preferably set to 70°C or more to 90°C or less because the abrasion resistance of an image can be enhanced. The heating temperature of the recording medium having the ink applied thereto may be read with a sensor incorporated into a position corresponding to the heating unit of the recording apparatus, or may be determined based on the relationship between the heat quantity set in advance in accordance with the kind of the ink and the kind of the recording medium and the temperature of the recording medium.

In the recording apparatus illustrated in each of Fig. 1A and Fig. 1B, a heater 25 supported by a frame (not shown) is arranged at a position on a downstream side in a sub-scanning direction A from a position at which the recording head 1 performs reciprocal scanning in a main scanning direction B. A recording medium P having an ink applied thereto can be heated with the heater 25. Specific examples of the heater 25 may include a sheathed heater and a halogen heater. The heater 25 is covered with a heater cover 26. The heater cover 26 is a member that efficiently irradiates the recording medium P with heat generated from the heater 25. Further, the heater cover 26 is also a member that protects the heater 25. The recording medium P having the ink ejected from the recording head 1 applied thereto is wound by a take-up spool 27 to form a roll-shaped take-up medium 24.

### [Recording Medium]

Any recording medium may be used as the recording medium. For example, recording media having ink absorbability (permeability) may be used. Examples of such recording media include: a recording medium free of a coating layer, such as plain paper, uncoated paper or synthetic paper; and a recording medium including a coating layer, such as recording paper, glossy paper or art paper. In addition, a recording medium that does not have permeability like a film or a sheet formed from a resin material, such as polyvinyl chloride (PVC) or polyethylene terephthalate (PET), may be used.

### [Recording Unit]

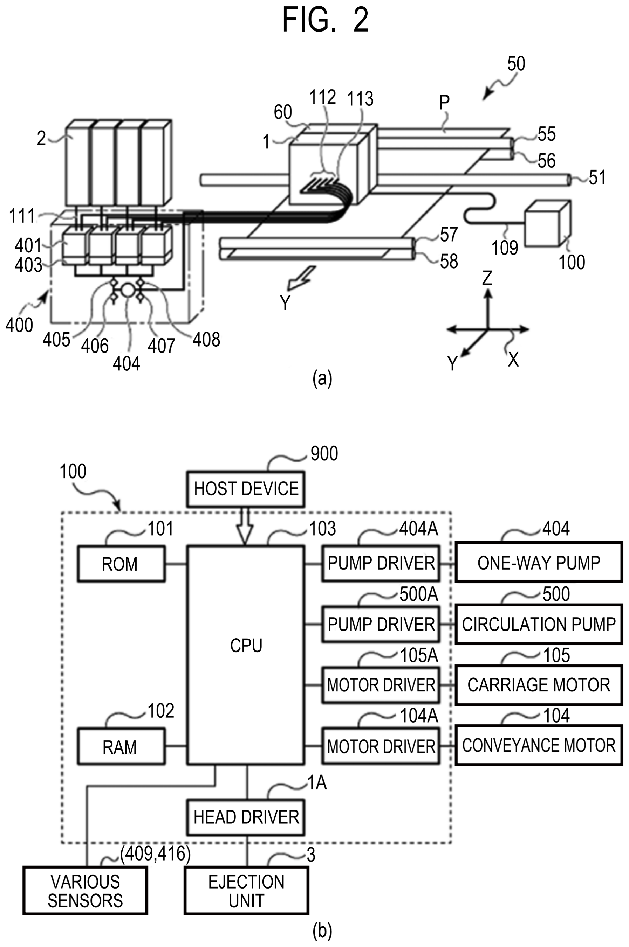

Fig. 2 is a view for schematically illustrating an example of a recording unit and is an enlarged view of the recording head in the recording unit and a surrounding area thereof. First, the schematic configuration of a recording unit 50 is described with reference to Fig. 2. Part (a) of Fig. 2 is a perspective view for schematically illustrating the recording unit 50 that allows the recording head 1 to be mounted thereon. The recording unit 50 forms a serial-type inkjet recording apparatus that perform recording on the recording medium P by ejecting an ink while causing the recording head 1 to perform scanning.

The recording head 1 is mounted on a carriage 60. The carriage 60 moves back and forth in a main scanning direction (X direction) along a guide shaft 51. The recording medium P is conveyed in a sub-scanning direction (Y direction) that intersects with (in this example, is orthogonal to) the main scanning direction with upstream conveyance rollers 55 and 56 and downstream conveyance rollers 57 and 58. In each of the figures referred to below, a Z direction indicates a vertical direction and intersects with (in this example, is orthogonal to) an X-Y plane defined by the X direction and the Y direction. The recording head 1 is configured to be detachable from and attachable onto the carriage 60 by a user.

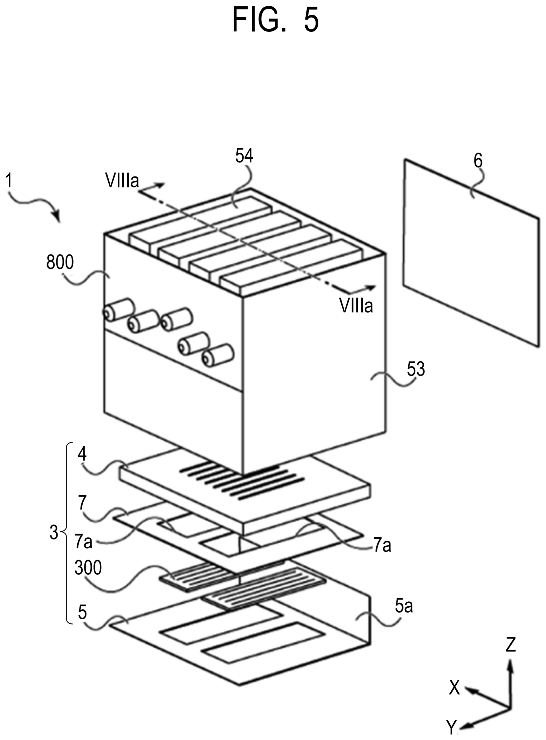

The recording head 1 is configured so as to include a circulation unit 54 (see Fig. 5) described later and an ejection unit 3 (see Fig. 5). Although the specific configuration is described later, the ejection unit 3 includes a plurality of ejection orifices and an energy generating element (hereinafter referred to as "ejection element") that generates ejection energy for ejecting an ink from each of the ejection orifices.

In addition, the recording unit 50 includes an ink storage portion 2, which servs as an ink supply source, and an ink supply unit 400. The ink stored in the ink storage portion 2 is supplied to the recording head 1 through a first supply path 111 and a second supply path 112 by the ink supply unit 400. In addition, a gas, such as a bubble, generated in the recording head 1 is discharged to the outside of the recording head 1 through a third air flow path 113 by the ink supply unit 400.

The recording unit 50 records a predetermined image on the recording medium P by repeatedly performing record scanning and conveyance operation. In the record scanning, the recording head 1 mounted on the carriage 60 performs recording by ejecting an ink while moving in the main scanning direction. In the conveyance operation, the recording medium P is conveyed in the sub-scanning direction. The recording head 1 can eject four kinds of inks including black (K), cyan (C), magenta (M) and yellow (Y) and can record a full-color image with those inks. However, the inks that can be ejected from the recording head 1 are not limited to the above-mentioned four kinds of inks. The present disclosure may also be applied to a recording head that ejects other kinds of inks. That is, the kinds and the number of inks ejected from the recording head are not limited. For example, one kind of ink or two or more kinds of inks may be ejected from the recording head. In addition, an ink containing no coloring material (clear ink) or a reaction liquid containing a reactant that reacts with an ink may also be used as an ink.

In addition, the recording unit 50 includes a control unit 100 and a cap member (not shown) that can cover an ejection orifice surface on which an ejection orifice of the recording head 1 is formed. The cap member is arranged at a position apart in the X direction from a conveyance path of the recording medium P in the recording unit 50. The cap member covers the ejection orifice surface of the recording head 1 at the time of a non-recording operation, and is used for, for example, suppressing drying of an ink in the vicinity of the ejection orifice, protecting the recording head and performing an operation of sucking an ink from the ejection orifice. A signal output from the control unit 100 is transmitted to the recording head 1 and the like through a signal line 109.

Part (b) of Fig. 2 is a block diagram for illustrating a control system for the recording unit 50. The control unit 100 of the recording unit 50 includes a CPU 103, a RAM 102, a ROM 101, a head driver 1A, motor drivers 104A and 105A and pump drivers 404A and 500A. The CPU 103 functions as a control unit that controls the operation of each part of the recording unit 50 based on a program, such as a processing procedure, stored in the ROM 101. The RAM 102 is used as a work area when the CPU 103 executes processing. The CPU 103 receives image data from a host device 900 located outside the recording unit 50 to control the head driver 1A and controls the drive of an ejection element arranged in the ejection unit 3. In addition, the CPU 103 also controls the drivers of various actuators arranged in the recording unit. For example, the CPU 103 controls the motor driver 104A that drives a conveyance motor 104 for conveying the recording medium P. The CPU 103 controls the motor driver 105A that drives a carriage motor 105 for moving the carriage 60. The CPU 103 controls the pump driver 500A that drives a circulation pump 500. The CPU 103 controls the pump driver 404A that drives a one-way pump 404 described later. In addition, the control unit 100 receives signals output from various sensors, such as a volume sensor, a pressure sensor 409 and a liquid sensor 416. In part (b) of Fig. 2, illustration is given of a mode in which processing involving receiving image data from the host device 900 is performed, but processing may also be performed in the recording unit 50 independently of the data from the host device 900.

### [Ink Supply Unit]

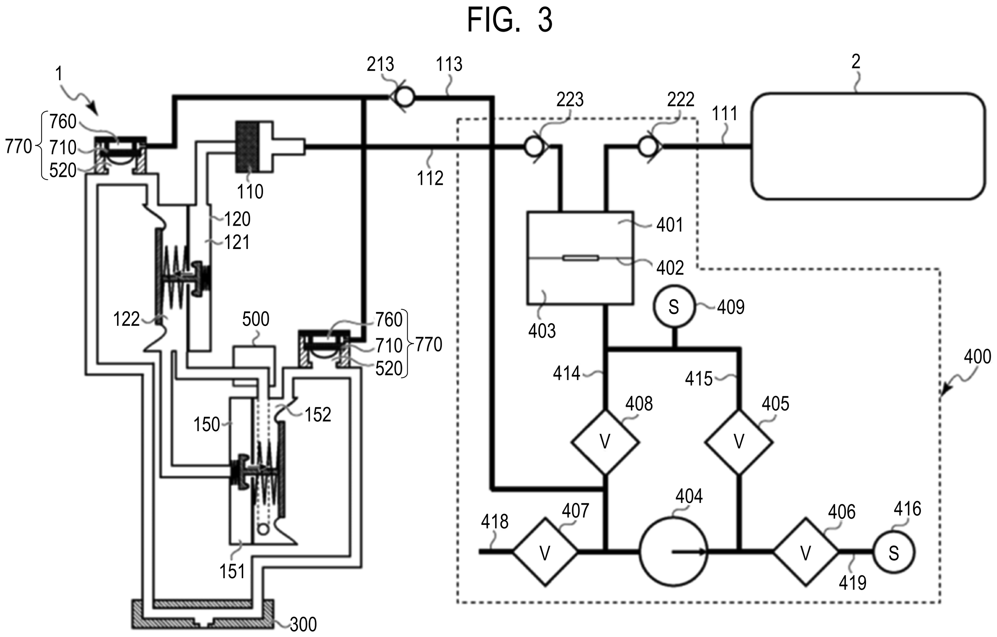

Fig. 3 is a schematic diagram for illustrating an example of a flow path of the ink supply unit. The ink supply unit 400 illustrated in Fig. 3 includes an intermediate storage portion 401 that temporarily stores an ink supplied from the ink storage portion 2 configured to be attachable onto and detachable from the recording unit 50, through the first supply path 111. A first check valve 222 is arranged in the middle of the first supply path 111, and the first check valve 222 regulates the backflow of an ink from the intermediate storage portion 401 to the ink storage portion 2. At least one surface of the intermediate storage portion 401 is formed of a flexible membrane 402, and the volume of the intermediate storage portion 401 can be changed. A volume sensor (not shown) is arranged in the intermediate storage portion 401. The volume sensor can detect the volume of the intermediate storage portion 401 by measuring the displacement of the flexible membrane 402. Based on the detection results of the volume of the intermediate storage portion 401 by the volume sensor, the amount of the ink in the intermediate storage portion 401 can be estimated. The amount of the ink in the intermediate storage portion 401 may be estimated based on the detection results of the volume of the intermediate storage portion 401 by the volume sensor and the amount of an ink consumed by, for example, formation of an image on the recording medium and suction of an ink from the cap member.

The intermediate storage portion 401 is in contact with a pressure chamber filled with air through intermediation of the flexible membrane 402. The pressure chamber of the intermediate storage portion 401 is hereinafter referred to as "intermediate pressure chamber 403". The pressure of the ink stored in the intermediate storage portion 401 can be changed by changing the pressure of a gas (air) in the intermediate pressure chamber 403. The ink stored in the intermediate storage portion 401 is supplied to the recording head 1 through the second supply path 112 connected to the intermediate storage portion 401 and a filter 110 of the recording head 1. A second check valve 223 is arranged in the middle of the second supply path 112, and the second check valve 223 regulates the backflow of an ink from the recording head 1 to the intermediate storage portion 401. The ink supply unit 400 includes the one-way pump 404 driven by the pump driver 404A. The one-way pump 404 is configured through use of, for example, a diaphragm pump and can suck and discharge air in one direction through the drive by the pump driver 404A.

The intermediate pressure chamber 403 and a suction side of the one-way pump 404 are connected to each other through a first air flow path 414. A first on-off valve 408 is arranged in the middle of the first air flow path 414, and the first air flow path 414 can be switched between communication and closing by an opening-closing operation of the first on-off valve 408. In the first air flow path 414, a first branched air flow path 418, which is branched between the first on-off valve 408 and the one-way pump 404, and one end of which is in communication with the atmosphere, is arranged. In the first branched air flow path 418, a third on-off valve 407 is arranged, and the suction side of the one-way pump 404 can be switched between sealing and opening to the atmosphere by an opening-closing operation of the third on-off valve 407.

In addition, the intermediate pressure chamber 403 and a jetting side of the one-way pump 404 are connected to each other through a second air flow path 415. A second on-off valve 405 is arranged in the middle of the second air flow path 415, and the second air flow path 415 can be switched between communication and closing by an opening-closing operation of the second on-off valve 405. In the second air flow path 415, a second branched air flow path 419, which is branched between the second on-off valve 405 and the one-way pump 404, and one end of which is in communication with the atmosphere, is arranged. In the second branched air flow path 419, a fourth on-off valve 406 is arranged, and the jetting side of the one-way pump 404 can be switched between sealing and opening to the atmosphere by an opening-closing operation of the fourth on-off valve 406. A liquid sensor 416 is arranged in an end portion opened to the atmosphere in the second branched air flow path 419. The liquid sensor 416 can detect an ink that has entered the air flow path. A pressure sensor 409 is arranged at any one of the positions that are in communication with the intermediate pressure chamber 403. The pressure sensor 409 can detect the pressure of the gas (air) in the intermediate pressure chamber 403. The one-way pump 404 and a decompression chamber 760 of a bubble extraction unit 770 in the recording head 1 are connected to each other through the third air flow path 113. A third check valve 213 is arranged in the middle of the third air flow path 113, and the third check valve 213 regulates the backflow of a gas (air) from the ink supply unit 400 to the decompression chamber 760. In Fig. 3, a first valve chamber 121, a second valve chamber 151 and a second pressure control chamber 152 are illustrated.

In order to record an image on the recording medium P, the ink supply unit 400 mainly performs four operations (pressure chamber pressurization operation, pressurization maintenance operation, ink replenishment operation and bubble extraction decompression operation). Based on the detection results by the volume sensor (not shown), the pressure sensor 409 and the like, the CPU 103 controls the one-way pump 404 and the first to fourth on-off valves, to thereby perform the pressure chamber pressurization operation, the pressurization maintenance operation, the ink replenishment operation and the bubble extraction decompression operation.

### [Bubble Extraction Decompression Operation]

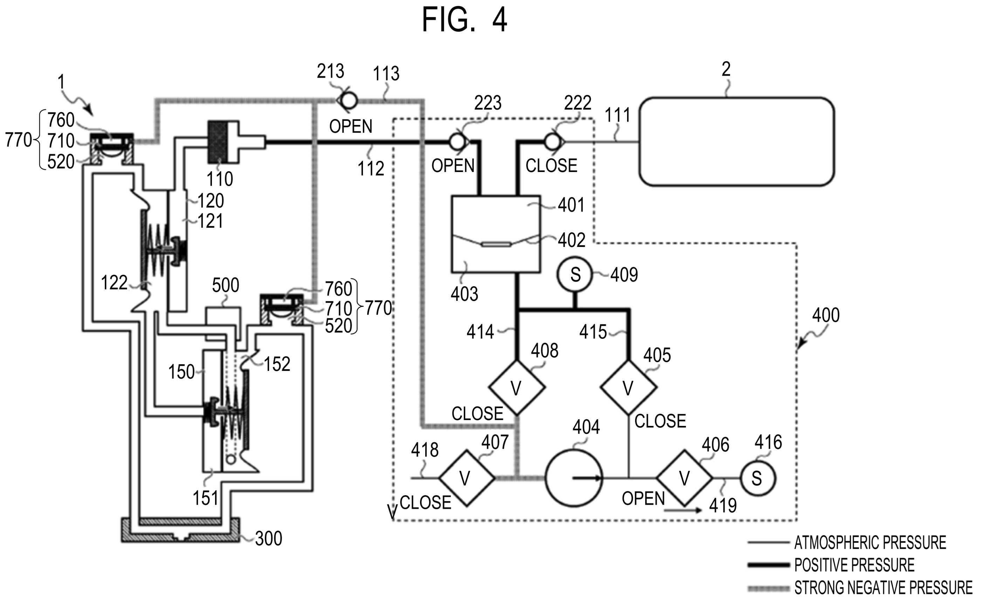

Fig. 4 is an explanatory schematic diagram for illustrating an example of a bubble extraction decompression operation. The bubble extraction decompression operation is an operation of decreasing the pressure in the decompression chamber 760. The moving speed of a gas from a bubble retention chamber 520 of the bubble extraction unit 770 to the decompression chamber 760 through a gas permeable membrane 710 in the recording head 1 is proportional to the difference between the pressure in the bubble retention chamber 520 and the pressure in the decompression chamber 760. Thus, it is preferable that the pressure in the decompression chamber 760 be maintained at a low pressure. The third check valve 213 that is arranged in the middle of the third air flow path 113 regulates the inflow of a gas from the third air flow path 113 to the decompression chamber 760. However, due to the inflow of a gas from the bubble retention chamber 520 through the gas permeable membrane 710 and the inflow of a gas that slightly permeates a member forming the decompression chamber 760, the pressure in the decompression chamber 760 is gradually increased with the passage of time. In such case in which the pressure in the decompression chamber 760 is gradually increased with the passage of time, the bubble extraction decompression operation of decreasing the pressure in the decompression chamber 760 is required. When it is estimated that the pressure in the decompression chamber 760 exceeds a predetermined pressure based on the elapsed time after the previous bubble extraction decompression operation, the ink supply unit 400 performs the bubble extraction decompression operation. At the time of the bubble extraction decompression operation, the ink supply unit 400 drives the one-way pump 404 to decrease the pressure in the decompression chamber 760 under a state in which the first on-off valve 408 is closed, the second on-off valve 405 is closed, the third on-off valve 407 is closed and the fourth on-off valve 406 is opened. When a predetermined period of time has elapsed after the one-way pump 404 is driven, and it is estimated that the pressure in the decompression chamber 760 reaches a predetermined pressure or less, the ink supply unit 400 stops the drive of the one-way pump 404. During this time, the first on-off valve 408 and the second on-off valve 405 are closed, and hence the pressure of the gas in the intermediate pressure chamber 403 is maintained at a positive pressure. The third check valve 213 is closed even when the pressure in each of the intermediate pressure chamber 403 and the first to third air flow paths is fluctuated due to the above-mentioned pressure chamber pressurization operation, pressurization maintenance operation, ink replenishment operation and the like after the bubble extraction decompression operation, and hence the pressure in the decompression chamber 760 is maintained at a low pressure (negative pressure). For example, under situations in which a bubble is liable to be generated, such as a situation at the start of initial use and a situation after cleaning, the frequency at which the bubble extraction decompression operation is performed may be increased. The frequency at which the bubble extraction decompression operation is performed may be decreased at the time of the start of initial use or with the passage of time after cleaning. In addition, the frequency at which the bubble extraction decompression operation is performed may be changed depending on the temperature, the usage state and the like.

### [Recording Head]

Fig. 5 is an exploded perspective view for illustrating an example of a recording head. The basic configuration of the recording head is described below mainly with reference to Fig. 5 and with reference to Fig. 2 as required. Here, an example including a circulation unit is described, but the circulation unit may be omitted. As illustrated in Fig. 5, the recording head 1 is configured so as to include the circulation unit 54 and the ejection unit 3 that ejects an ink supplied from the circulation unit 54, to the recording medium P. The recording head 1 is fixedly supported on the carriage 60 with a positioning unit and an electrical contact (which are not shown) arranged on the carriage 60 of the recording unit 50. The recording head 1 performs recording on the recording medium P by ejecting an ink while moving in the main scanning direction (X direction) indicated in Fig. 2 together with the carriage 60.

A second support member 7 having openings 7a for inserting ejection modules 300 is bonded and fixed to one surface of a first support member 4. The second support member 7 holds an electrical wiring member 5 that is electrically connected to the ejection modules 300. The electrical wiring member 5 applies an electric signal for ejecting an ink, to the ejection modules 300. The electrical connection portion between the ejection modules 300 and the electrical wiring member 5 is sealed with a sealing material (not shown) to be protected from ink corrosion and an external impact. In addition, an electrical contact substrate 6 is subjected to thermal compression bonding to an end portion 5a of the electrical wiring member 5 through use of, for example, an anisotropic conductive film (not shown), and thus the electrical wiring member 5 and the electrical contact substrate 6 are electrically connected to each other. The electrical contact substrate 6 includes an external signal input terminal (not shown) for receiving an electric signal from the recording unit 50.

As illustrated in Fig. 2, the ink supply unit 400 connected to the ink storage portion 2 serving as a supply source of an ink includes the first supply path 111 and the second supply path 112. A main body side connecting member is arranged at a distal end of the second supply path 112. When the recording head 1 is mounted on the recording unit 50, the main body side connecting member arranged at the distal end of the second supply path 112 is detachably connected to a head side connecting member 800 arranged in a head housing 53 of the recording head 1. As a result, ink supply paths (first supply path 111 and second supply path 112) leading to the recording head 1 from the ink storage portion 2 through the ink supply unit 400 are formed. The recording head 1 uses four kinds of inks. Thus, the ink storage portion 2, the first supply path 111, the second supply path 112 and the circulation unit 54 are each arranged in four sets corresponding to the respective inks, and four ink supply paths corresponding to the respective inks are independently formed. In this manner, the recording unit 50 includes an ink supply system in which an ink is supplied from the ink storage portion 2 arranged outside the recording head 1.

### [Configuration of Bubble Extraction Unit]

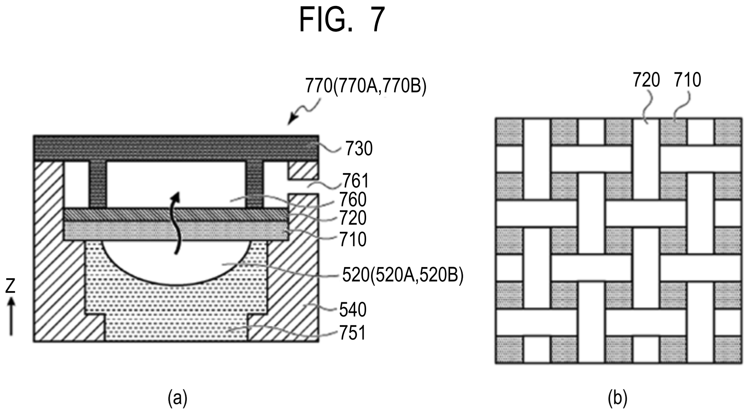

Fig. 7 is a schematic view for illustrating an example of a bubble extraction unit. Part (a) of Fig. 7 is a sectional view of a bubble extraction unit 770. Part (b) of Fig. 7 is a schematic view of a deformation suppressing member 720 in the bubble extraction unit 770. A second bubble extraction unit 770B has the same configuration as that of a first bubble extraction unit 770A. A second bubble retention chamber 520B has the same configuration as that of a first bubble retention chamber 520A. The first bubble extraction unit 770A and the second bubble extraction unit 770B may hereinafter be collectively described as "bubble extraction unit 770". In addition, the first bubble retention chamber 520A and the second bubble retention chamber 520B may be collectively described as "bubble retention chamber 520". As illustrated in part (a) of Fig. 7, the bubble extraction unit 770 (first bubble extraction unit 770A and second bubble extract unit 770B) includes the bubble retention chamber 520 (first bubble retention chamber 520A and second bubble retention chamber 520B) and the decompression chamber 760. Further, the bubble extraction unit 770 includes the gas permeable membrane 710, the deformation suppressing member 720, a first communication port 751 for causing the bubble retention chamber 520 and the ink flow paths or the liquid chambers to be in communication with each other and a second communication port 761 for causing the decompression chamber 760 and the ink supply unit 400 to be in communication with each other.

The bubble extraction unit 770 (first bubble extraction unit 770A and second bubble extraction unit 770B) is in communication with the ink supply unit 400 arranged in a main body portion of the recording unit 50 and is decompressed by the operation of the ink supply unit 400. Further, the third check valve 213 (Fig. 3 and Fig. 4) is arranged between the bubble extraction unit 770 and the ink supply unit 400, and hence the bubble extraction operation can be performed when the decompressed state is maintained even without the operation of the recording unit 50. The third check valve 213 may be arranged in each of branched portions of the third air flow path 113 between the ink supply unit 400 and the first bubble extraction unit 770A and between the ink supply unit 400 and the second bubble extraction unit 770B. The third check valve 213 may also be arranged in each of converged portions of the third air flow path 113 between the ink supply unit 400 and the first bubble extraction unit 770A and between the ink supply unit 400 and the second bubble extraction unit 770B.

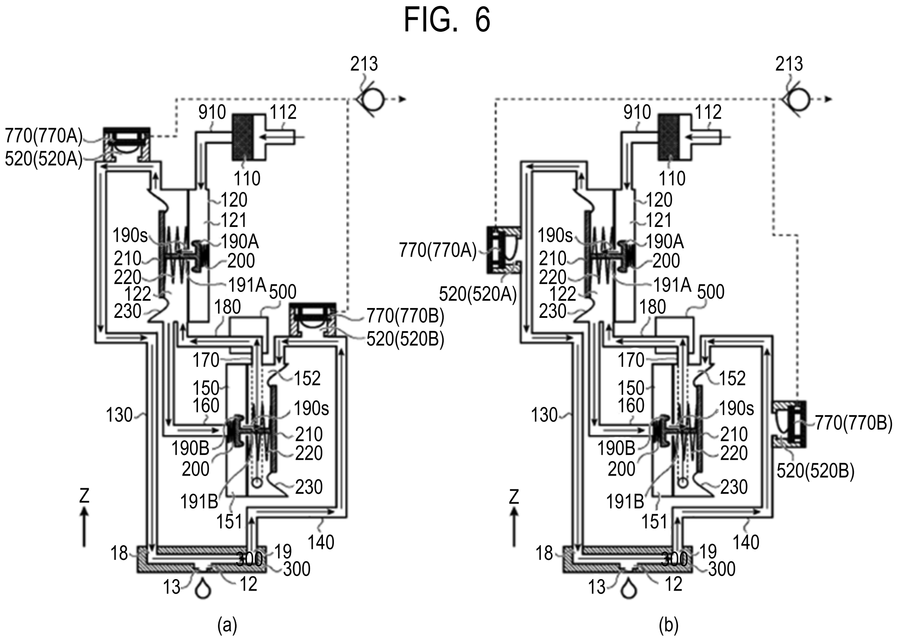

Fig. 6 is a vertical sectional view for illustrating an example of a circulation path. As illustrated in part (a) of Fig. 6, the first bubble extraction unit 770A is arranged on an upper side in a vertical direction of a supply flow path 130, and the second bubble extraction unit 770B is arranged on an upper side in a vertical direction of a first collecting flow path 140. One bubble extraction unit 770 (first bubble extraction unit 770A) may be arranged only in the supply flow path 130. The bubble extraction unit 770 may be arranged on an upper side in a vertical direction of the ink storage portion 2, the first supply path 111, the second supply path 112, a third supply path 910, the filter 110, a pump inlet flow path 170, a pump outlet flow path 180, a bypass flow path 160, the pressure chamber 12 or the like. The present disclosure does not encompass the mode in which the first bubble retention chamber 520A is in communication with a side surface of the supply flow path 130, and the first bubble extraction unit 770A is formed so as to extend to the side of the first bubble retention chamber 520A as illustrated in part (b) of Fig. 6. In the case in which the decompression chamber is arranged to the side in the vertical direction of the liquid retention chamber, when an ink containing wax is applied, the bubble extraction efficiency cannot be improved, and ejection stability cannot be obtained even when the relationship between the specific gravity and the temperature is adjusted.

The pressure chamber 12, a common supply flow path 18 and a common collecting flow path 19 are formed with respect to each of a plurality of ejection orifices 13 forming an ejection orifice array. A first pressure adjustment unit 120 includes a first valve chamber 121 and a first pressure control chamber 122. A second pressure adjustment unit 150 includes the second valve chamber 151 and the second pressure control chamber 152. The first pressure adjustment unit 120 is configured so that the control pressure is relatively higher than the control pressure of the second pressure adjustment unit 150. The first valve chamber 121 is in communication with the first pressure control chamber 122 through a communication port 191A that can be opened and closed by a valve 190A illustrated in Fig. 6. A valve shaft 190s to be inserted into the communication port 191A protrudes in a center portion of the valve 190. When the valve shaft 190s is pressed against the urging force of a valve spring 200, the valve 190 is separated from a partition wall (not shown) to enable the flow of an ink in the communication port 191. The second valve chamber 151 is in communication with the second pressure control chamber 152 through a communication port 191B that is opened and closed by a valve 190B illustrated Fig. 6. A pressure adjustment spring 220 serving as an urging member is arranged between a pressure plate 210 and the partition wall (not shown). Due to the urging force of the pressure adjustment spring 220, the pressure plate 210 and a flexible member 230 are urged in a direction in which the internal volume of the first pressure control chamber 122 is increased. In addition, when the pressure in the first pressure control chamber 122 is decreased, the pressure plate 210 and the flexible member 230 are displaced in a direction in which the internal volume of the first pressure control chamber 122 is reduced against the pressure of the pressure adjustment spring 220.

### [Gas Permeable Membrane]

As illustrated in part (a) of Fig. 7, the gas permeable membrane 710 is formed in a housing portion of the circulation unit 54 forming the bubble retention chamber 520 so as to separate the bubble retention chamber 520 and the decompression chamber 760 from each other. The housing portion of the circulation unit 54 forming the bubble retention chamber 520 is hereinafter referred to as "unit housing 540". The gas permeable membrane 710 is bonded to the unit housing 540, for example, by bonding methods such as thermal welding, ultrasonic welding and laser welding. Any one of the bonding methods such as thermal welding, ultrasonic welding and laser welding may be used as long as the bubble retention chamber 520 is sealed so as to prevent the ink from leaking into the decompression chamber 760.

The gas permeable membrane 710 is a member having flexibility and preferably has a planar shape. As the gas permeable membrane 710, a membrane formed of a material having a free volume or pores sufficient for allowing the permeation of, for example, air that is a mixed gas of oxygen gas, nitrogen gas and the like, specifically, an oxygen molecule, a nitrogen molecule and a mixture of those molecules (hereinafter collectively referred to as "gas") is used. When a gas permeable membrane formed of a material having pores is used, the pore size (diameter) is only required to allow the permeation of the above-mentioned gas without allowing the permeation of an ink. For example, the diameter is preferably 100 nm or less, and is preferably 0.01 nm or more. The material of the gas permeable membrane 710 is preferably a resin. Specifically, examples of the material of the gas permeable membrane 710 include polypropylene (PP), polyethylene (PE), polymethylpentene (TPX) and polytetrafluoroethylene (PTFE). In order to enhance the bubble extraction efficiency, the material of the gas permeable membrane 710 preferably has high gas permeability. In addition, the material of the gas permeable membrane 710 is required to be easily bonded to the unit housing 540 by thermal welding and not to cause tearing or peeling. The material of the gas permeable membrane 710 is required to have reliability as a liquid-contact material. Thus, the material of the gas permeable membrane 710 is preferably selected from the viewpoints of gas permeability, a production method (productivity) and reliability. The material of the gas permeable membrane is preferably polypropylene or polyethylene, more preferably polypropylene because those materials are excellent in gas permeability and can further improve ejection stability.

Examples of a bubble that flows into the bubble retention chamber 520 include an initial bubble that remains at the start of initial use, that is, after initial filling (about 0.2 mL), a storage portion replacement bubble that flows into the bubble retention chamber 520 during normal use (about 0.015 mL per month) and a permeation bubble that permeates the bubble retention chamber 520 from outside (about 0.001 mL/day). In order to treat those bubbles, it is preferable that the bubble extraction operation be performed in a permeation amount of a bubble of 0.01 mL/day or more. As specified in "JIS K7126-1", the permeation amount of a gas through the gas permeable membrane 710 can be verified by a pressure sensor method. The pressure sensor method is a method involving measuring a gas permeation degree by keeping one side (low-pressure side) separated by a test piece in a vacuum, introducing a test gas into another side (high-pressure side) and measuring an increase in pressure on the low-pressure side. According to the pressure sensor method, a gas permeation coefficient can be calculated from the gas permeation degree and the thickness of the test piece. In the pressure sensor method, the permeation amount of a gas through the gas permeable membrane can be verified by measuring the gas permeation degree with the test piece being as the gas permeable membrane. An ink is filled into the recording head 1 by suction, the bubble in the bubble retention chamber 520 is brought into contact with the entire gas permeable membrane 710, and the recording head 1 is left in an environment with, for example, a normal temperature (25°C) and a normal pressure (1 atm) under a state in which the pressure of the gas in the decompression chamber 760 is maintained at a negative pressure of about 50 kPa by the ink supply unit 400. The amount of the bubble in the bubble retention chamber 520 is measured in chronological order by computed tomography (CT) or the like in a series of such operations, and thus the permeation amount of the bubble (gas) through the gas permeable membrane 710 can be verified.

In order to weld the gas permeable membrane 710 to the unit housing 540 to seal the bubble retention chamber 520, the material of the gas permeable membrane 710 preferably has high reliability of welding of the gas permeable membrane 710 and high reliability as a liquid-contact material. In order to achieve a bubble permeation amount of 0.01 mL/day or more, the thickness of the gas permeable membrane 710 is preferably 0.10 mm or less, more preferably less than 0.10 mm, particularly preferably 0.09 mm or less. When the thickness is 0.10 mm or less, the bubble is easily extracted, and hence the ejection stability can be further improved. In addition, the thickness of the gas permeable membrane 710 is preferably 0.01 mm or more. When the thickness is 0.01 mm or more, the gas permeable membrane has sufficient strength, and the bubble can be efficiently removed. As a result, the ejection stability can be further improved.

### [Bubble Retention Chamber]

Fig. 6 is a vertical sectional view for illustrating an example of a circulation path. As illustrated in part (a) of Fig. 6, the first bubble retention chamber 520A is arranged on the upper side in the vertical direction of the supply flow path 130 so as to be in communication with the supply flow path 130 through the first communication port 751. The second bubble retention chamber 520B is arranged on the upper side in the vertical direction of the first collecting flow path 140 so as to be in communication with the first collecting flow path 140 through the first communication port 751. As a result, the bubble mixed into the ink in the first pressure adjustment unit 120, the second pressure adjustment unit 150, the supply flow path 130, the first collecting flow path 140 and the like due to circulation and an ejection operation can be trapped and held in the bubble retention chamber 520 to be discharged from the ink by the bubble extraction operation. Examples of the bubble mixed into the ink include an upstream bubble that has entered the recording head due to replacement of the ink storage portion 2, an eluted bubble that is generated in the recording head due to environmental changes and an unexpected bubble that is generated in the recording head unexpectedly. The kind of the bubble discharged by the bubble extraction operation is not limited thereto. As long as the bubble can be trapped and held in the bubble retention chamber 520, and the amount of the bubble is large enough to achieve a sufficient bubble extraction speed, the bubble mixed into the ink can be discharged to the outside of the recording head 1.

The maximum temperature Ti (°C) of the ink in the bubble retention chamber may be controlled, for example, with a heater arranged in the recording head. In addition, the temperature of the ink in the bubble retention chamber may be measured, for example, with a temperature sensor installed inside the bubble retention chamber or the like. The maximum temperature Ti (°C) of the ink in the bubble retention chamber is preferably set to 30°C or more to 50°C or less because the ejection stability can be further improved.

Examples of the material of the unit housing 540 forming the bubble retention chamber 520 include polypropylene (PP) and polyethylene (PE). The material of the unit housing 540 is preferably polypropylene because the ejection stability can be further improved in addition to the viewpoints of reliability of welding of the gas permeable membrane 710 and ease of handling.

### [Decompression Chamber]

As illustrated in part (a) of Fig. 7, the decompression chamber 760 includes: an opening portion in which the gas permeable membrane 710 is arranged; an opening portion for welding the gas permeable membrane 710 opposed to the above-mentioned opening portion; and the second communication port 761. The decompression chamber 760 is formed so as to be surrounded by the unit housing 540, the gas permeable membrane 710 and a cover member 730. The second communication port 761 is formed so as to penetrate through a side portion of the unit housing 540 and causes the decompression chamber 760 and a deaeration flow path to be in communication with each other. The opening portion for welding of the gas permeable membrane 710 is sealed by bonding the cover member 730 that is a separate member to the unit housing 540. Examples of a bonding method of the cover member 730 include thermal welding, ultrasonic welding and laser welding. Examples of the material of the cover member 730 include polypropylene (PP) and polyethylene (PE). From the viewpoints of reliability of welding of the cover member 730 and ease of handling, it is preferable that the material of the cover member 730 be the same as that of the unit housing 540 forming the bubble retention chamber 520.

### [Principle of Bubble Extraction]

At the time of the bubble extraction operation, when the decompression chamber 760 is put into a decompressed state, the pressure difference between the pressure of the bubble in the bubble retention chamber 520 and the pressure of the gas in the decompression chamber 760 causes the bubble to permeate the gas permeable membrane 710. The permeation amount in the bubble extraction operation is represented by the following formula (X). In the formula (X), Q represents a gas permeation amount, P represents a permeation coefficient, "p" represents a decompression degree (gauge pressure), S represents a bubble contact area, "t" represents time, and L represents the thickness of the gas permeable membrane 710. $Q = P \times p \times S \times t / L$

The gas permeation amount represented by the Q is the permeation amount of the gas contained in the bubble by the bubble extraction operation. The permeation coefficient represented by the P is a numerical value determined by the material physical properties of the gas permeable membrane 710 and represents the basic speed of the bubble extraction operation. The decompression degree represented by the "p" is the decompression degree (gauge pressure) of the decompression chamber 760. The bubble contact area represented by the S is the area of the bubble in contact with the gas permeable membrane 710. The numerical value represented by the L is the thickness of the gas permeable membrane 710. When the decompression degree is higher, the permeation amount of the bubble is increased. In order to ensure the permeation amount of the bubble sufficient for treating the bubble generated during normal use and to further improve the ejection stability, the decompression degree is preferably set to 10 kPa or more. The decompression degree is preferably 70 kPa or less.

The bubble removal unit 770 (the first bubble removal unit 770A and the second bubble removal unit 770B) includes the bubble retention chamber 520 (the first bubble retention chamber 520A and the second bubble retention chamber 520B). In addition, the decompression chamber 760 is arranged adjacent to the bubble retention chamber 520 via the gas permeable membrane 710.

The configuration of the circulation path is not limited to the above-mentioned configuration. A first configuration example and a second configuration example of the ink path and each modification example of the circulation path are described below as other configurations of the circulation path.

### [First Configuration Example of Ink Path]

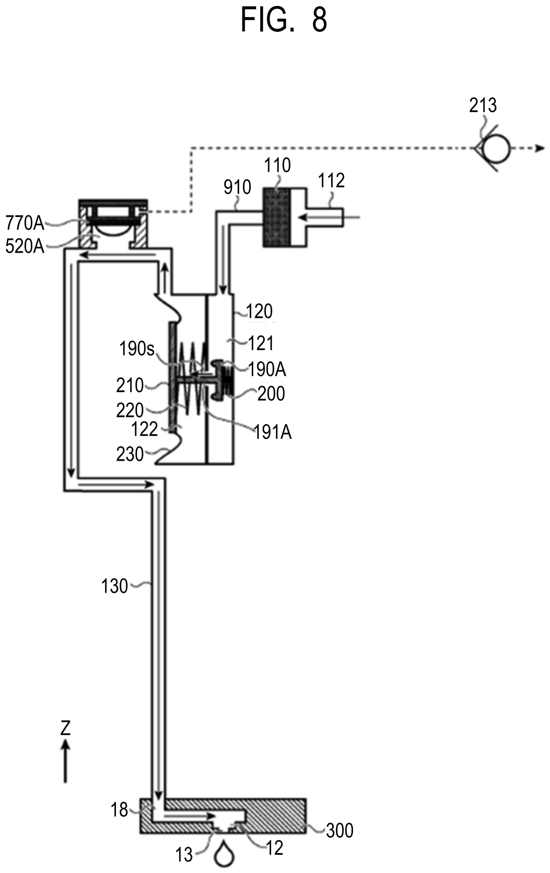

Fig. 8 is a view for schematically illustrating a first configuration example of an ink path. The first configuration example of the ink path is an example in which the second pressure adjustment unit 150 and the second bubble retention chamber 520B, the circulation pump 500, the bypass flow path 160 and the first collecting flow path 140 in Fig. 6 are not arranged. In the first configuration example of the ink path, ink circulation is not performed, and the ink supplied from the second supply path 112 flows through the first pressure adjustment unit 120, the supply flow path 130 and the pressure chamber 12 in the stated order to be ejected from the ejection orifice 13. The first pressure control chamber 122, the supply flow path 130 and the pressure chamber 12 are subjected to pressure control by the first pressure adjustment unit 120, to thereby achieve the stable ejection of an ink.

The first bubble retention chamber 520A is arranged on the upper side in the vertical direction of the supply flow path 130 so as to be in communication with the supply flow path 130, and the first bubble extraction unit 770A is formed so as to extend to an upper side in a vertical direction of the first bubble retention chamber 520A. As a result, the bubble mixed into the ink in the first pressure adjustment unit 120, the supply flow path 130 or the like due to the circulation and ejection operation can be trapped in the first bubble retention chamber 520A to be discharged from the ink by the bubble extraction operation. Examples of the bubble to be mixed into the ink include the above-mentioned upstream bubble, eluted bubble and unexpected bubble, but are not limited thereto. The bubble in an amount to the extent that the bubble can be trapped in the bubble retention chamber 520 and the bubble extraction speed is sufficiently obtained can be discharged from the ink. Thus, the possibility of the bubble entering the ink flow path that is in communication with the ejection orifice 13 can be significantly decreased.

The first bubble extraction unit 770A is in communication with the ink supply unit 400 in the main body portion of the recording unit 50 and is decompressed by the operation of the ink supply unit 400. Further, the third check valve 213 is arranged between the bubble extraction unit 770 and the ink supply unit 400, and the decompressed state is maintained even when the main body portion of the recording unit 50 is not always in operation, with the result that the bubble extraction operation can be performed. The third check valve 213 may be arranged in the third air flow path 113 between the first bubble extraction unit 770A and the ink supply unit 400.

The bubble retention chamber 520 and the bubble extraction unit 770 may be arranged at two or more positions. In addition, the bubble retention chamber 520 and the bubble extraction unit 770 are not required to be arranged in the supply flow path 130. For example, the bubble retention chamber 520 and the bubble extraction unit 770 may be arranged on the upper side in the vertical direction of the ink storage portion 2, the first supply path 111, the second supply path 112, the third supply path 910, the filter 110, the pressure chamber 12 and the like. In addition, the bubble retention chamber 520 and the bubble extraction unit 770 are not always required to be arranged on the upper side in the vertical direction of communication portions of the supply flow path 130 and the like. As long as the configuration is such that the bubble can be trapped and brought into contact with the gas permeable membrane, the bubble retention chamber 520 may be formed so as to be in communication with the side surface of the communication portion, and the bubble extraction unit 770 may be formed so as to extend to the side of the bubble retention chamber 520. The same holds true for the case in which the bubble retention chambers 520 and the bubble extraction units 770 are arranged in a plurality of portions of the communication portions other than the supply flow path 130 and the first collecting flow path 140.

### [First Modification Example of Circulation Path]

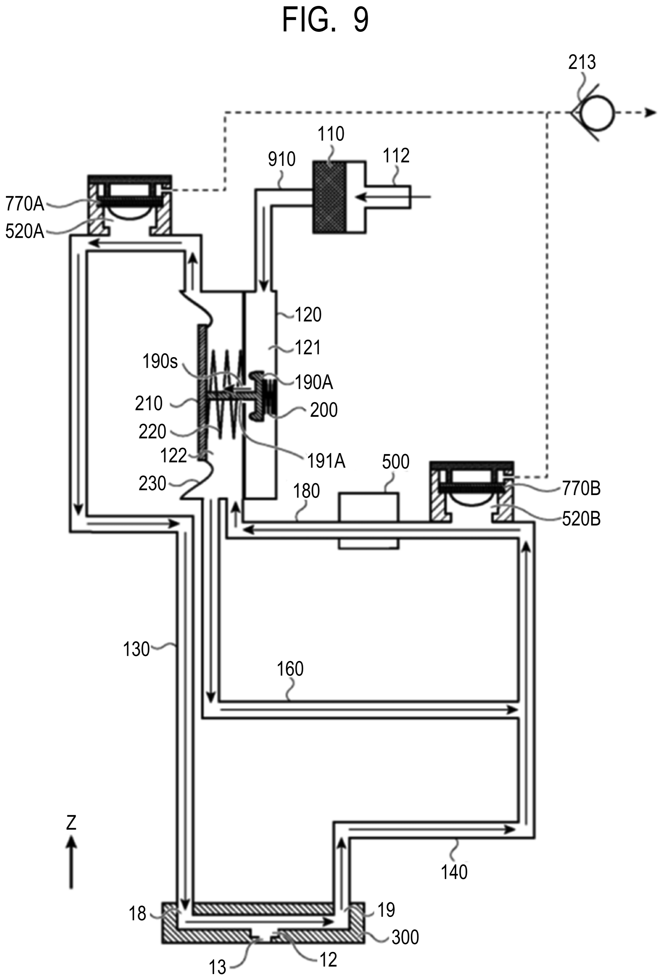

Fig. 9 is a view for schematically illustrating a first modification example of a circulation path. Fig. 9 shows a circulation path in the case in which ejection is not performed and circulation is performed. The first modification example of the circulation path is an example in which the second pressure adjustment unit 150 in Fig. 6 is not arranged, and a bypass flow path 160 and the first collecting flow path 140 are directly connected to each other.

In the first modification example of the circulation path, the flow path resistance of the flow path of an ink flowing to the first collecting flow path 140 through the bypass flow path 160 is represented by R1, and the flow path resistance of the flow path of an ink flowing from the supply flow path 130 to the first collecting flow path 140 through the ejection module 300 is represented by R2. The flow rate of an ink flowing through each flow path is inversely proportional to the flow path resistance, and hence the ratio between the flow rate of an ink in the flow path through the bypass flow path 160 and the flow rate of an ink in the flow path through the ejection module 300 is R2:R1. Each flow path resistance is set so as to achieve the circulation amount capable of suppressing the thickening of an ink in the vicinity of the ejection orifice 13 in the ejection module 300 in accordance with the above-mentioned relationship. That is, each flow path resistance is set so that the flow speed of the ink in the pressure chamber 12 reaches a predetermined flow speed or more. The flow path resistance R1 of the flow path through the bypass flow path 160 is controlled by, for example, changing the sectional area of the flow path or the length of the flow path and arranging a throttle in the flow path.

The first bubble retention chamber 520A is arranged on the upper side in the vertical direction of the supply flow path 130 so as to be in communication with the supply flow path 130, and the first bubble extraction unit 770A is formed so as to extend to the upper side in the vertical direction of the first bubble retention chamber 520A. In addition, the second bubble retention chamber 520B is arranged on the upper side in the vertical direction of the first collecting flow path 140 so as to be in communication with the first collecting flow path 140, and the second bubble extraction unit 770B is formed so as to extend to an upper side in a vertical direction of the second bubble retention chamber 520B. As a result, the bubble mixed into the ink in the first pressure adjustment unit 120, the supply flow path 130, the first collecting flow path 140 and the like due to the circulation and ejection operation can be trapped in the bubble retention chamber 520 to be discharged from the ink by the bubble extraction operation. Examples of the bubble to be mixed into the ink include the above-mentioned upstream bubble, eluted bubble and unexpected bubble, but are not limited thereto. The bubble in an amount to the extent that the bubble can be trapped in the bubble retention chamber 520 and the bubble extraction speed is sufficiently obtained can be discharged from the ink. Thus, the possibility of the bubble entering the ink flow path that is in communication with the ejection orifice 13 can be significantly decreased.

The first bubble extraction unit 770A and the second bubble extraction unit 770B are in communication with the ink supply unit 400 in the main body portion of the recording unit 50 and are decompressed by the operation of the ink supply unit 400. Further, the third check valve 213 is arranged between the bubble extraction unit 770 and the ink supply unit 400, and the decompressed state is maintained even when the main body portion of the recording unit 50 is not always in operation, with the result that the bubble extraction operation can be performed. The third check valve 213 may be arranged in each of branched portions of the third air flow path 113 between the ink supply unit 400 and the first bubble extraction unit 770A and between the ink supply unit 400 and the second bubble extraction unit 770B. The third check valve 213 may also be arranged in each of converged portions of the third air flow path 113 between the ink supply unit 400 and the first bubble extraction unit 770A and between the ink supply unit 400 and the second bubble extraction unit 770B.

The bubble retention chamber 520 and the bubble extraction unit 770 are not required to be arranged in both the supply flow path 130 and the first collecting flow path 140, but may be arranged only in the supply flow path 130 or only in the first collecting flow path 140. In addition, the bubble retention chamber 520 and the bubble extraction unit 770 may be arranged at three or more positions. The bubble retention chamber 520 and the bubble extraction unit 770 are also not required to be arranged in the supply flow path 130 and the first collecting flow path 140. For example, the bubble retention chamber 520 and the bubble extraction unit 770 may be arranged on the upper side in the vertical direction of the ink storage portion 2, the first supply path 111, the second supply path 112 and the third supply path 910. The bubble retention chamber 520 and the bubble extraction unit 770 may be arranged on an upper side in a vertical direction of the filter 110, the pump outlet flow path 180, the bypass flow path 160, the pressure chamber 12 and the like. In addition, the bubble retention chamber 520 and the bubble extraction unit 770 are not always required to be arranged on the upper side in the vertical direction of the communication portions of the supply flow path 130 and the like. As long as the configuration is such that the bubble can be trapped and brought into contact with the gas permeable membrane, the bubble retention chamber 520 may be formed so as to be in communication with the side surface of the communication portion, and the bubble extraction unit 770 may be formed so as to extend to the side of the bubble retention chamber 520. The same holds true for the case in which the bubble retention chambers 520 and the bubble extraction units 770 are arranged in a plurality of portions of the communication portions other than the supply flow path 130 and the first collecting flow path 140.

### [Second Configuration Example of Ink Path]

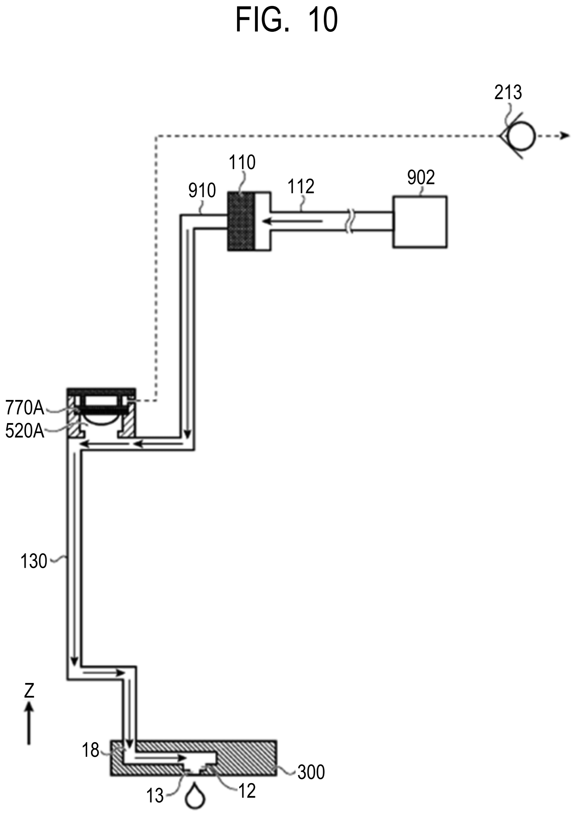

Fig. 10 is a view for schematically illustrating a second configuration example of an ink path. The second configuration example of the ink path is an example in which the first pressure adjustment unit 120 and the second pressure adjustment unit 150, the second bubble retention chamber 520B, the circulation pump 500, the bypass flow path 160 and the first collecting flow path 140 in Fig. 6 are not arranged. The second configuration example of the ink path is an example in which a third pressure adjustment unit 902 that is in communication with the second supply path 112 is arranged instead of the first pressure adjustment unit 120, the second pressure adjustment unit 150 and the like. In the second configuration example of the ink path, ink circulation is not performed, and the ink supplied from the second supply path 112 flows through the supply flow path 130 and the pressure chamber 12 in the stated order to be ejected from the ejection orifice 13. The second supply path 112, the third supply path 910, the supply flow path 130 and the pressure chamber 12 are subjected to pressure control by the third pressure adjustment unit 902, to thereby achieve the stable ejection of an ink.

The third pressure adjustment unit 902 is arranged outside the recording head 1 and is in communication with the third supply path 910 of the recording head 1 through the second supply path 112. An example of the third pressure adjustment unit 902 is a hydraulic head system utilizing a hydraulic head difference, but any system may be applied. This modification example may be applied to an ink cartridge system in which an ink cartridge is replaced when the ink stored in the ink storage portion has been consumed, an ink supply system such as a so-called CISS system (continuous ink supply system) in which an ink is injected through an inlet port or the like.

The first bubble retention chamber 520A is arranged on the upper side in the vertical direction of the supply flow path 130 so as to be in communication with the supply flow path 130, and the first bubble extraction unit 770A is formed so as to extend to an upper side in a vertical direction of the first bubble retention chamber 520A. As a result, the bubble mixed into the ink in the supply flow path 130 or the like due to the circulation and ejection operation can be trapped in the first bubble retention chamber 520A to be discharged from the ink by the bubble extraction operation. Examples of the bubble to be mixed into the ink include the above-mentioned upstream bubble, eluted bubble and unexpected bubble, but are not limited thereto. The bubble in an amount to the extent that the bubble can be trapped in the bubble retention chamber 520 and the bubble extraction speed is sufficiently obtained can be discharged from the ink. Thus, the possibility of the bubble entering the ink flow path that is in communication with the ejection orifice 13 can be significantly decreased.

The first bubble extraction unit 770A is in communication with the ink supply unit 400 in the main body portion of the recording unit 50 and is decompressed by the operation of the ink supply unit 400. Further, the third check valve 213 is arranged between the bubble extraction unit 770 and the ink supply unit 400, and the decompressed state is maintained even when the main body portion of the recording unit 50 is not always in operation, with the result that the bubble extraction operation can be performed. The third check valve 213 may be arranged in the third air flow path 113 between the first bubble extraction unit 770A and the ink supply unit 400.

The bubble retention chamber 520 and the bubble extraction unit 770 may be arranged at two or more positions. In addition, the bubble retention chamber 520 and the bubble extraction unit 770 are not required to be arranged in the supply flow path 130. For example, the bubble retention chamber 520 and the bubble extraction unit 770 may be arranged on the upper side in the vertical direction of the ink storage portion 2, the first supply path 111, the second supply path 112, the third supply path 910, the filter 110, the pressure chamber 12 and the like. In addition, the bubble retention chamber 520 and the bubble extraction unit 770 are not always required to be arranged on the upper side in the vertical direction of communication portions of the supply flow path 130 and the like. As long as the configuration is such that the bubble can be trapped and brought into contact with the gas permeable membrane, the bubble retention chamber 520 may be formed so as to be in communication with the side surface of the communication portion, and the bubble extraction unit 770 may be formed so as to extend to the side of the bubble retention chamber 520. The same holds true for the case in which the bubble retention chambers 520 and the bubble extraction units 770 are arranged in a plurality of portions of the communication portions other than the supply flow path 130 and the first collecting flow path 140.

### [Second Modification Example of Circulation Path]

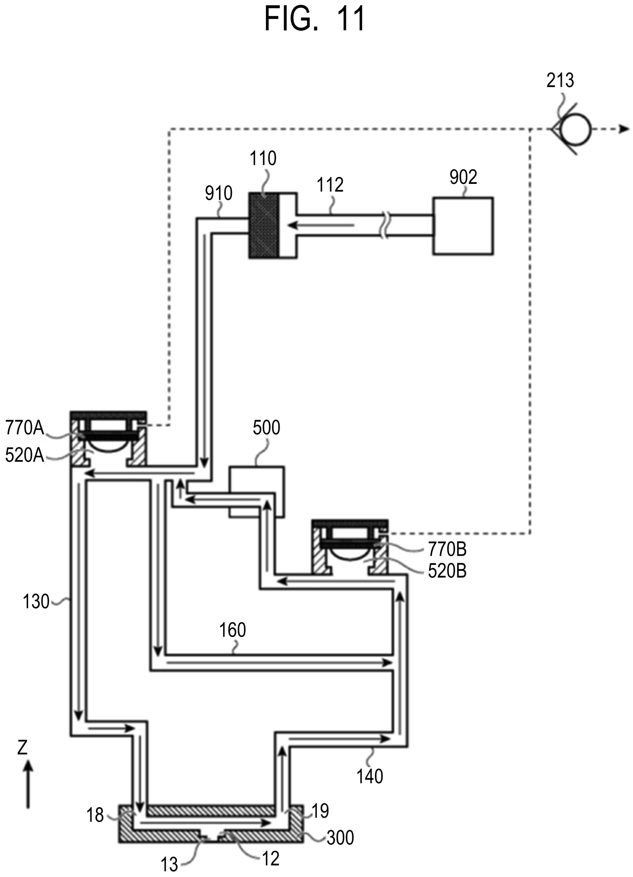

Fig. 11 is a view for schematically illustrating a second modification example of a circulation path. Fig. 11 shows a circulation path in the case in which ejection is not performed and circulation is performed. The second modification example of the circulation path is an example in which the first pressure adjustment unit 120 and the second pressure adjustment unit 150 in Fig. 6 are not arranged, and a bypass flow path 160 and the first collecting flow path 140 are directly connected to each other.

In the second modification example of the circulation path, the flow path resistance of the flow path of an ink flowing to the first collecting flow path 140 through the bypass flow path 160 is represented by R1, and the flow path resistance of the flow path of an ink flowing from the supply flow path 130 to the first collecting flow path 140 through the ejection module 300 is represented by R2. The flow rate of an ink flowing through each flow path is inversely proportional to the flow path resistance, and hence the ratio between the flow rate of an ink in the flow path through the bypass flow path 160 and the flow rate of an ink in the flow path through the ejection module 300 is R2:R1. Each flow path resistance is set so as to achieve the circulation amount capable of suppressing the thickening of an ink in the vicinity of the ejection orifice 13 in the ejection module 300 in accordance with the above-mentioned relationship. That is, each flow path resistance is set so that the flow speed of the ink in the pressure chamber 12 reaches a predetermined flow speed or more. The flow path resistance R1 of the flow path through the bypass flow path 160 is controlled by, for example, changing the sectional area of the flow path or the length of the flow path and arranging a throttle in the flow path.

The third pressure adjustment unit 902 is arranged outside the recording head 1 and is in communication with the third supply path 910 of the recording head 1 through the second supply path 112. An example of the third pressure adjustment unit 902 is a hydraulic head system utilizing a hydraulic head difference, but any system may be applied. This modification example may also be applied to any of the above-mentioned systems, that is, the ink cartridge system or the ink supply system, such as the CISS system.

The first bubble retention chamber 520A is arranged on the upper side in the vertical direction of the supply flow path 130 so as to be in communication with the supply flow path 130, and the first bubble extraction unit 770A is formed so as to extend to the upper side in the vertical direction of the first bubble retention chamber 520A. In addition, the second bubble retention chamber 520B is arranged on the upper side in the vertical direction of the first collecting flow path 140 so as to be in communication with the first collecting flow path 140, and the second bubble extraction unit 770B is formed so as to extend to an upper side in a vertical direction of the second bubble retention chamber 520B. As a result, the bubble mixed into the ink in the supply flow path 130, the first collecting flow path 140, the pump inlet flow path 170, the pump outlet flow path 180 and the like due to the circulation and ejection operation can be trapped in the bubble retention chamber 520 to be discharged from the ink by the bubble extraction operation. Examples of the bubble to be mixed into the ink include the above-mentioned upstream bubble, eluted bubble and unexpected bubble, but are not limited thereto. The bubble in an amount to the extent that the bubble can be trapped in the bubble retention chamber 520 and the bubble extraction speed is sufficiently obtained can be discharged from the ink. Thus, the possibility of the bubble entering the ink flow path that is in communication with the ejection orifice 13 can be significantly decreased.

The first bubble extraction unit 770A and the second bubble extraction unit 770B are in communication with the ink supply unit 400 in the main body portion of the recording unit 50 and are decompressed by the operation of the ink supply unit 400. Further, the third check valve 213 is arranged between the bubble extraction unit 770 and the ink supply unit 400, and the decompressed state is maintained even when the main body portion of the recording unit 50 is not always in operation, with the result that the bubble extraction operation can be performed. The third check valve 213 may be arranged in each of branched portions of the third air flow path 113 between the ink supply unit 400 and the first bubble extraction unit 770A and between the ink supply unit 400 and the second bubble extraction unit 770B. The third check valve 213 may also be arranged in each of converged portions of the third air flow path 113 between the ink supply unit 400 and the first bubble extraction unit 770A and between the ink supply unit 400 and the second bubble extraction unit 770B.

The bubble retention chamber 520 and the bubble extraction unit 770 are not required to be arranged in both the supply flow path 130 and the first collecting flow path 140, but may be arranged only in the supply flow path 130 or only in the first collecting flow path 140. In addition, the bubble retention chamber 520 and the bubble extraction unit 770 may be arranged at three or more positions. The bubble retention chamber 520 and the bubble extraction unit 770 are also not required to be arranged in the supply flow path 130 and the first collecting flow path 140. For example, the bubble retention chamber 520 and the bubble extraction unit 770 may be arranged on the upper side in the vertical direction of the ink storage portion 2, the first supply path 111, the second supply path 112 and the third supply path 910. The bubble retention chamber 520 and the bubble extraction unit 770 may be arranged on an upper side in a vertical direction of the filter 110, the pump inlet flow path 170, the pump outlet flow path 180, the bypass flow path 160, the pressure chamber 12 and the like. In addition, the bubble retention chamber 520 and the bubble extraction unit 770 are not always required to be arranged on the upper side in the vertical direction of the communication portions of the supply flow path 130 and the like. As long as the configuration is such that the bubble can be trapped and brought into contact with the gas permeable membrane, the bubble retention chamber 520 may be formed so as to be in communication with the side surface of the communication portion, and the bubble extraction unit 770 may be formed so as to extend to the side of the bubble retention chamber 520. The same holds true for the case in which the bubble retention chambers 520 and the bubble extraction units 770 are arranged in a plurality of portions of the communication portions other than the supply flow path 130 and the first collecting flow path 140.

### (Reaction Liquid)

The recording method of the present disclosure may include a reaction liquid applying step of applying an aqueous reaction liquid, which contains a reactant that reacts with the aqueous ink, to the recording medium. Respective components to be used in the reaction liquid and the like are described in detail below.

### [Reactant]

The reaction liquid is brought into contact with the ink to react with the ink, to thereby aggregate components (a resin, a surfactant and a component having an anionic group such as a self-dispersible pigment) in the ink. The reaction liquid contains the reactant. When the reactant is present, at the time of contact between the ink and the reactant in the recording medium, the state of presence of the component having an anionic group in the ink is destabilized, and hence the aggregation of the ink can be accelerated. Examples of the reactant may include: a polyvalent metal ion; a cationic component such as a cationic resin; and an organic acid. The reactants may be used alone or in combination thereof.

Examples of the polyvalent metal ion for forming a polyvalent metal salt may include: divalent metal ions, such as Ca²⁺, Cu²⁺, Ni²⁺, Mg²⁺, Sr²⁺, Ba²⁺ and Zn²⁺; and trivalent metal ions, such as Fe³⁺, Cr³⁺, Y³⁺ and Al³⁺. A water-soluble polyvalent metal salt (which may be a hydrate) formed of the polyvalent metal ion and an anion bonded to each other may be used to incorporate the polyvalent metal ion into the reaction liquid. Examples of the anion may include: inorganic anions, such as Cl⁻, Br, I⁻, ClO⁻, ClO₂⁻, ClO₃⁻, ClO₄⁻, NO₂⁻, NO₃⁻, SO₄²-, CO₃²-, HCO₃, PO₄³-, HPO₄²- and H₂PO₄⁻; and organic anions, such as HCOO⁻, (COO⁻)₂, COOH(COO⁻), CH₃COO⁻, CH₃CH(OH)COO⁻, C₂H₄(COO⁻)₂, C₆H₅COO⁻, C₆H₄(COO⁻)₂ and CH₃SO₃⁻. When the polyvalent metal ion is used as the reactant, its content (% by mass) in terms of polyvalent metal salt in the reaction liquid is preferably 1.0% by mass or more to 20.0% by mass or less with respect to the total mass of the reaction liquid. In this specification, when the polyvalent metal salt is a hydrate, the "content (% by mass) of the polyvalent metal salt" in the reaction liquid means the "content (% by mass) of the anhydride of the polyvalent metal salt" obtained by removing water serving as a hydrate.

The reaction liquid containing the organic acid has a buffering capacity in an acidic region (at a pH of less than 7.0, preferably at a pH of from 2.0 to 5.0) to efficiently turn the anionic group of a component present in the ink into an acid type, to thereby aggregate the ink. Examples of the organic acid may include: monocarboxylic acids, such as formic acid, acetic acid, propionic acid, butyric acid, benzoic acid, glycolic acid, lactic acid, salicylic acid, pyrrolecarboxylic acid, furancarboxylic acid, picolinic acid, nicotinic acid, thiophenecarboxylic acid, levulinic acid and coumalic acid, and salts thereof; dicarboxylic acids, such as oxalic acid, malonic acid, succinic acid, glutaric acid, adipic acid, maleic acid, fumaric acid, itaconic acid, sebacic acid, phthalic acid, malic acid and tartaric acid, and salts and hydrogen salts thereof; tricarboxylic acids, such as citric acid and trimellitic acid, and salts and hydrogen salts thereof; and tetracarboxylic acids such as pyromellitic acid, and salts and hydrogen salts thereof. When the organic acid is used as the reactant, the content (% by mass) of the organic acid in the reaction liquid is preferably 1.0% by mass or more to 50.0% by mass or less with respect to the total mass of the reaction liquid.

Examples of the cationic resin may include resins having structures of primary to tertiary amines and resins having structures of quaternary ammonium salts. Specific examples thereof may include resins having structures of, for example, vinylamine, allylamine, vinylimidazole, vinylpyridine, dimethylaminoethyl methacrylate, ethylene imine, guanidine, diallyldimethylammonium chloride and an alkylamine-epichlorohydrin condensate. To improve solubility in the reaction liquid, the cationic resin and an acidic compound may be used in combination, or the cationic resin may be subjected to quaternization treatment. When the cationic resin is used as the reactant, the content (% by mass) of the cationic resin in the reaction liquid is preferably 0.1% by mass or more to 10.0% by mass or less with respect to the total mass of the reaction liquid.

### [Aqueous Medium]

The reaction liquid is an aqueous reaction liquid containing at least water as an aqueous medium. Examples of the aqueous medium to be used in the reaction liquid may include the same examples as those of an aqueous medium that can be incorporated into the ink to be described later. A water-soluble organic solvent to be described later that can be incorporated into the ink may be incorporated into the aqueous medium to be used in the reaction liquid. The content (% by mass) of the water-soluble organic solvent in the reaction liquid is preferably 1.0% by mass or more to 45.0% by mass or less with respect to the total mass of the reaction liquid. The water-soluble organic solvent preferably contains a specific water-soluble hydrocarbon compound to be described later. The content (% by mass) of the water-soluble hydrocarbon compound in the reaction liquid is preferably 1.0% by mass or more to 20.0% by mass or less with respect to the total mass of the reaction liquid. In addition, the content (% by mass) of the water in the reaction liquid is preferably 50.0% by mass or more to 95.0% by mass or less with respect to the total mass of the reaction liquid.

### [Other Components]

The reaction liquid may contain various other components as required. Examples of the other components may include the same examples as those of other components that can be incorporated into the ink to be described later.

### [Physical Properties of Reaction Liquid]

The reaction liquid is an aqueous reaction liquid to be applied to an ink jet system. Accordingly, from the viewpoint of reliability, it is preferable that the physical property values of the reaction liquid be appropriately controlled. Specifically, the surface tension of the reaction liquid at 25°C is preferably 20 mN/m or more to 60 mN/m or less. In addition, the viscosity of the reaction liquid at 25°C is preferably 1.0 mPa·s or more to 10.0 mPa·s or less. The pH of the reaction liquid at 25°C is preferably 5.0 or more to 9.5 or less, more preferably 6.0 or more to 9.0 or less.

### (Ink)

The ink to be used in the recording method of the present disclosure is an aqueous ink for ink jet containing a resin particle. The glass transition temperature T_{g} (°C) of the resin particle, the maximum temperature Tᵢ (°C) of the ink in the bubble retention chamber and the heating temperature T_{fix} (°C) of the recording medium in the step of heating the recording medium satisfy the relationship of the following formula (1). The ink of the present disclosure does not need to be a so-called "curable ink." Accordingly, the ink of the present disclosure does not need to contain a compound such as a polymerizable monomer that can be polymerized by the application of external energy. Respective components to be used in the ink and the like are described in detail below. ${T}_{i} < {T}_{g} \leq {T}_{fix}$

### [Coloring Material]

The ink preferably includes the coloring material. A pigment or a dye may be used as the coloring material. The content (% by mass) of the coloring material in the ink is preferably 0.50% by mass or more to 15.00% by mass or less, more preferably 1.00% by mass or more to 10.00% by mass or less with respect to the total mass of the ink.

Specific examples of the pigment may include: inorganic pigments, such as carbon black and titanium oxide; and organic pigments, such as azo, phthalocyanine, quinacridone, isoindolinone, imidazolone, diketopyrrolopyrrole and dioxazine pigments. The pigments may be used alone or in combination thereof.

A resin-dispersed pigment using a resin as a dispersant, a self-dispersible pigment, which has a hydrophilic group bonded to its particle surface, or the like may be used as a dispersion system for the pigment. In addition, a resin-bonded pigment having a resin-containing organic group chemically bonded to its particle surface, a microcapsule pigment, which contains a particle whose surface is covered with, for example, a resin, or the like may be used. Pigments different from each other in dispersion system out of those pigments may be used in combination. Of those, not a resin-bonded pigment or a microcapsule pigment but a resin-dispersed pigment having a resin serving as a dispersant, the resin being caused to physically adsorb to its particle surface, is preferably used.

A dispersant that can disperse the pigment in an aqueous medium through the action of an anionic group is preferably used as a resin dispersant for dispersing the pigment in the aqueous medium. A resin having an anionic group may be used as the resin dispersant and such a resin as described later, in particular, a water-soluble resin is preferably used. The mass ratio of the content (% by mass) of the pigment in the ink to the content (% by mass) of the resin dispersant therein is preferably 0.3 times or more to 10.0 times or less.

A pigment having an anionic group, such as a carboxylic acid group, a sulfonic acid group or a phosphonic acid group, bonded to its particle surface directly or through any other atomic group (-R-) may be used as the self-dispersible pigment. The anionic group may be any one of an acid type or a salt type. When the group is a salt type, the group may be in any one of a state in which part of the group dissociates or a state in which the entirety thereof dissociates. When the anionic group is a salt type, examples of a cation serving as a counterion may include an alkali metal cation, ammonium and an organic ammonium. Specific examples of the other atomic group (-R-) may include: a linear or branched alkylene group having 1 to 12 carbon atoms; an arylene group, such as a phenylene group or a naphthylene group; a carbonyl group; an imino group; an amide group; a sulfonyl group; an ester group; and an ether group. In addition, groups obtained by combining those groups may be adopted.

A dye having an anionic group is preferably used as the dye. Specific examples of the dye may include dyes, such as azo, triphenylmethane, (aza)phthalocyanine, xanthene and anthrapyridone dyes. The dyes may be used alone or in combination thereof. It is more preferable that the coloring material be a resin-dispersed pigment in which a resin serving as a dispersant is physically adsorbed to the surface of a pigment particle or a self-dispersible pigment in which an anionic group is bonded to the surface of a pigment particle directly or via another atomic group (-R-).

The ink preferably contains a pigment. When the ink contains the pigment, the fusion of the resin particle is physically inhibited and easily suppressed, and hence the ejection stability can be further improved. In addition, the content (% by mass) of the pigment in the ink is preferably 0.10 times or more in terms of mass ratio with respect to the content (% by mass) of the resin particle therein because such suppressing effect on the fusion of the resin particle is easily obtained and hence the ejection stability can be further improved. The mass ratio is preferably 2.00 times or less, more preferably 1.00 times or less.

### [Resin Particle]

The ink contains a resin particle. When the ink containing the resin particle is used, the abrasion resistance of an image to be recorded can be improved.

Examples of a resin constituting the resin particle may include an acrylic resin, a urethane resin, an olefin-based resin and a polyester-based resin. Of those, an acrylic resin and a urethane resin are preferable, and an acrylic resin formed of a unit derived from (meth)acrylic acid or a (meth)acrylate is preferable. When the acrylic resin is used, the suppressing effect on the fusion can be further improved, and the ejection stability can be further improved. The content (% by mass) of the resin particle in the ink is preferably 0.10% by mass or more to 20.00% by mass or less, more preferably 6.00% by mass or more to 15.00% by mass or less with respect to the total mass of the ink. When the content of the resin particle is less than 6.00% by mass, the abrasion resistance of an image may slightly decrease. Meanwhile, when the content of the resin particle is more than 15.00% by mass, fusion in the bubble retention chamber is liable to occur, and hence the ejection stability may slightly decrease. The resin particle is present in the ink in a dispersed state, that is, in the form of a resin emulsion.

A resin having a hydrophilic unit and a hydrophobic unit as its constituent units is preferable as the acrylic resin. Of those, a resin having a hydrophilic unit derived from (meth)acrylic acid and a hydrophobic unit derived from at least one of a monomer having an aromatic ring or a (meth)acrylic acid ester-based monomer is preferable. A resin having a hydrophilic unit derived from (meth)acrylic acid and a hydrophobic unit derived from a (meth)acrylic acid ester-based monomer is particularly preferable.

The hydrophilic unit is a unit having a hydrophilic group such as an anionic group. The hydrophilic unit may be formed by, for example, polymerizing a hydrophilic monomer having a hydrophilic group. Specific examples of the hydrophilic monomer having a hydrophilic group may include: acidic monomers each having a carboxylic acid group, such as (meth)acrylic acid, itaconic acid, maleic acid and fumaric acid; and anionic monomers, such as anhydrides and salts of these acidic monomers. A cation for forming the salt of the acidic monomer may be, for example, a lithium, sodium, potassium, ammonium or organic ammonium ion. The hydrophobic unit is a unit free of a hydrophilic group such as an anionic group. The hydrophobic unit may be formed by, for example, polymerizing the hydrophobic monomer free of a hydrophilic group such as anionic group. Specific examples of the hydrophobic monomer may include: monomers each having an aromatic ring, such as styrene, α-methylstyrene and benzyl (meth)acrylate; and (meth)acrylic acid ester-based monomers, such as methyl (meth)acrylate, ethyl (meth)acrylate, propyl (meth)acrylate, butyl (meth)acrylate, 2-ethylhexyl (meth)acrylate and cyclohexyl (meth)acrylate.

The resin constituting the resin particle is preferably a resin having a cross-linked structure. A resin particle formed of a resin having a cross-linked structure is difficult to fuse and can firmly maintain its shape. For this reason, when the ink containing a resin particle formed of a resin having a cross-linked structure is used, the ejection stability can be further improved.

The resin constituting the resin particle preferably contains a unit derived from a cross-linkable monomer. An example of the cross-linkable monomer may be a monomer having two or more ethylenically unsaturated bonds. Specific examples thereof may include: dienes, such as butadiene and isoprene; bifunctional alkyl (meth)acrylates, such as 1,4-butanediol di(meth)acrylate, ethylene glycol di(meth)acrylate, diethylene glycol di(meth)acrylate, triethylene glycol di(meth)acrylate, polyethylene glycol di(meth)acrylate, propylene glycol di(meth)acrylate, dipropylene glycol di(meth)acrylate, tripropylene glycol di(meth)acrylate and polypropylene glycol di(meth)acrylate; trifunctional alkyl (meth)acrylates, such as trimethylolpropane tri(meth)acrylate and ethylene oxide-modified trimethylolpropane tri(meth)acrylate; and divinylbenzene. Of those, from the viewpoint of further improving the ejection stability, at least one kind selected from the group consisting of: ethylene glycol di(meth)acrylate; diethylene glycol di(meth)acrylate; triethylene glycol di(meth)acrylate; polyethylene glycol di(meth)acrylate; propylene glycol di(meth)acrylate; dipropylene glycol di(meth)acrylate; tripropylene glycol di(meth)acrylate; and polypropylene glycol di(meth)acrylate is preferable as the cross-linkable monomer.

In the resin constituting the resin particle, the content (% by mass) of a cross-linking unit is preferably 0.5% by mass or more to 3.0% by mass or less with respect to the total mass of the resin. When the content of the cross-linking unit is less than 0.5% by mass, the improving effect on the ejection stability may decrease. Meanwhile, when the content of the cross-linking unit is more than 3.0% by mass, the resin particle may be difficult to fuse on the recording medium, and hence the improving effect on the abrasion resistance may decrease.

The urethane-based resin may be obtained by, for example, causing a polyisocyanate and a polyol to react with each other. In addition, a chain extender may be further caused to react with the reaction product. Examples of the olefin-based resin may include polyethylene and polypropylene. The polyester-based resin may be obtained by, for example, subjecting a polycarboxylic acid and a polyol to dehydration condensation.

The term "resin particle" as used herein refer to a resin particle present in an aqueous medium in a state of forming a particle whose particle diameter may be measured by a dynamic light scattering method when the resin is neutralized with an alkali in an amount equimolar to its acid value. Whether the resin is water-soluble or water-dispersible (resin particle) may be judged in accordance with the following method. First, a liquid (resin solid content: 10% by mass) containing the resin neutralized with an alkali (e.g., sodium hydroxide or potassium hydroxide) corresponding to its acid value is prepared. Next, the prepared liquid is diluted with pure water 10-fold (on a volume basis) to prepare a sample solution. Then, when a particle having a particle diameter is measured at the time of the measurement of the particle diameter of the resin in the sample solution by the dynamic light scattering method, the resin can be judged to be a resin particle. Measurement conditions at this time may be set, for example, as follows: Set Zero: 30 seconds; number of times of measurement: 3; and measurement time: 180 seconds. A particle size analyzer based on the dynamic light scattering method (e.g., a product available under the product name "UPA-EX150" from Nikkiso Co., Ltd.) or the like may be used as a particle size distribution measuring device. Of course, the particle size distribution measuring device to be used, the measurement conditions and the like are not limited to the foregoing.

The resin particle preferably has a functional group having charge on a surface thereof. Examples of the functional group having charge may include a carboxylic acid group, a sulfonic acid group and a sulfate ester group. When the resin particle has such functional group, an electric repulsive force is generated between the particles to make the fusion difficult, and hence the ejection stability can be further improved.

The anionic group amount of the resin particle is preferably 50 µmol/g or more to 200 µmol/g or less. When the anionic group amount is less than 50 µmol/g, fusion may be liable to occur, and hence the improving effect on the ejection stability may decrease. Meanwhile, when the anionic group amount is more than 200 µmol/g, the water solubility of the resin particle is improved, and hence the improving effect on the abrasion resistance may decrease.

The anionic group amount of the resin particle may be measured and calculated in accordance with the following method. First, hydrochloric acid is added to a water dispersion liquid of the resin particle until the pH becomes 2 or less, and the mixture is stirred for 24 hours. After that, a precipitate is separated by centrifugation and dried to provide a resin. 1 g of the resultant resin is pulverized, 30 g of a 0.1 mol/L sodium hydrogen carbonate aqueous solution is added thereto, and the mixture is stirred for 15 hours. After that, a supernatant is separated by centrifugation. Pure water is added to 1 g of the separated supernatant to provide 15 g of a sample. The resultant sample is titrated with 0.1 mol/L hydrochloric acid, and the anionic group amount per unit mass of the resin particle is calculated from a measured value. The various analyzes described above may each be performed by using a resin extracted from the ink by an appropriate method.

It is preferable that the glass transition temperature T_{g} (°C) of the resin particle and the maximum temperature Tᵢ (°C) of the ink in the bubble retention chamber satisfy the following formula (2). When the glass transition temperature T_{g} (°C) of the resin particle and the maximum temperature Tᵢ (°C) of the ink in the bubble retention chamber satisfy the relationship of the following formula (2), the ejection stability of the ink can be further improved. A difference between the T_{g} (°C) and the Tᵢ (°C) is preferably 50°C or less. ${T}_{g} - {T}_{i} \geq 10$

It is preferable that the glass transition temperature T_{g} (°C) of the resin particle and the heating temperature T_{fix} (°C) of the recording medium in the step of heating the recording medium after the image recording satisfy the relationship of the following formula (3). When the glass transition temperature T_{g} (°C) of the resin particle and the heating temperature T_{fix} (°C) of the recording medium satisfy the relationship of the following formula (3), the abrasion resistance of an image to be recorded can be further improved. A difference between the T_{fix} (°C) and the T_{g} (°C) is preferably 40°C or less. ${T}_{fix} - {T}_{g} \geq 5$

The glass transition temperature T_{g} (°C) of the resin particle is preferably 50°C or more to 80°C or less. When the glass transition temperature T_{g} of the resin particle is less than 50°C, fusion may be liable to occur, and hence the improving effect on the ejection stability may decrease. Meanwhile, when the glass transition temperature of the resin particle is more than 80°C, the improving effect on the abrasion resistance may decrease. The glass transition temperature of the resin particle may be measured with a differential scanning calorimeter (e.g., product name: "DSC Q1000", manufactured by TA Instruments).

The weight-average molecular weight of the resin constituting the resin particle is preferably 1,000 or more to 2,000,000 or less. The cumulative 50% particle diameter in volume-based particle size distribution (D₅₀) of the resin particle measured by a dynamic light scattering method is preferably 50 nm or more to 500 nm or less. The cumulative 50% particle diameter in volume-based particle size distribution of the resin particle is the diameter of a particle that is 50% integrated from the smallest particle diameter side with respect to the total volume of the measured particles in the particle diameter integration curve. The cumulative 50% particle diameter in volume-based particle size distribution of the resin particle may be measured with a particle size analyzer of a dynamic light scattering system under the measurement conditions as described later. The resin particle is not required to encapsulate a coloring material.

### [Water-soluble Resin]

The ink may contain a water-soluble resin. Whether the resin is water-soluble or water-dispersible (resin particle) can be judged by the above-mentioned method. The acid value of the water-soluble resin is preferably 50 mgKOH/g or more to 200 mgKOH/g or less, more preferably 100 mgKOH/g or more to 150 mgKOH/g or less. The weight-average molecular weight of the water-soluble resin is preferably 3,000 or more to 15,000 or less.

The content (% by mass) of the water-soluble resin in the ink is preferably 0.10% by mass or more to 10.00% by mass or less, more preferably 0.50% by mass or more to 5.00% by mass or less with respect to the total mass of the ink. Examples of the form of the water-soluble resin may include a block copolymer, a random copolymer, a graft copolymer and a combination thereof. The resins may be used alone or in combination thereof.

### [Composition of Water-soluble Resin]

Examples of the water-soluble resin may include an acrylic resin, a urethane-based resin, an olefin-based resin and a polyester-based resin. Of those, an acrylic resin and a urethane-based resin are preferable, and an acrylic resin including a unit derived from (meth)acrylic acid or a (meth)acrylate is more preferable.

A resin having a hydrophilic unit and a hydrophobic unit as its constituent units is preferable as the acrylic resin. Of those, a resin having a hydrophilic unit derived from (meth)acrylic acid and a hydrophobic unit derived from at least one of a monomer having an aromatic ring or a (meth)acrylic acid ester-based monomer is preferable. A resin having a hydrophilic unit derived from (meth)acrylic acid and a hydrophobic unit derived from at least one monomer of styrene or α-methylstyrene is particularly preferable. Those resins may each be suitably utilized as a resin dispersant for dispersing the pigment because the resins each easily cause an interaction with the pigment.

The hydrophilic unit is a unit having a hydrophilic group such as an anionic group. The hydrophilic unit may be formed by, for example, polymerizing a hydrophilic monomer having a hydrophilic group. Specific examples of the hydrophilic monomer having a hydrophilic group may include: acidic monomers each having a carboxylic acid group, such as (meth)acrylic acid, itaconic acid, maleic acid and fumaric acid; and anionic monomers, such as anhydrides and salts of these acidic monomers. A cation for forming the salt of the acidic monomer may be, for example, a lithium, sodium, potassium, ammonium or organic ammonium ion. The hydrophobic unit is a unit free of a hydrophilic group such as an anionic group. The hydrophobic unit may be formed by, for example, polymerizing the hydrophobic monomer free of a hydrophilic group such as anionic group. Specific examples of the hydrophobic monomer may include: monomers each having an aromatic ring, such as styrene, α-methylstyrene and benzyl (meth)acrylate; and (meth)acrylic acid ester-based monomers, such as methyl (meth)acrylate, ethyl (meth)acrylate, propyl (meth)acrylate, butyl (meth)acrylate, 2-ethylhexyl (meth)acrylate and cyclohexyl (meth)acrylate.

The urethane-based resin may be obtained by, for example, causing a polyisocyanate and a polyol to react with each other. In addition, a chain extender may be further caused to react with the reaction product. Examples of the olefin-based resin may include polyethylene and polypropylene. The polyester-based resin may be obtained by, for example, subjecting a polyvalent carboxylic acid and a polyol to dehydration condensation.

### [Wax Particle]

The ink may contain a wax particle formed of a wax. The wax in this specification may be a composition blended with a component except the wax or may be the wax itself. The wax particle may be dispersed with a dispersant, such as a surfactant or a resin. The waxes may be used alone or in combination thereof. The content (% by mass) of the wax particle in the ink is preferably 0.50% by mass or more to 2.00% mass or less with respect to the total mass of the ink.

The wax is an ester of a higher monohydric or dihydric alcohol that is insoluble in water and a fatty acid in a narrow sense. Accordingly, animal-based waxes and plant-based waxes are included in the category of the wax but oils and fats are not included therein. High-melting point fats, mineral-based waxes, petroleum-based waxes and blends and modified products of various waxes are included therein in a broad sense. In the present disclosure, the waxes in a broad sense may each be used without any particular limitation. The waxes in a broad sense may be classified into natural waxes, synthetic waxes, blends thereof (blended waxes) and modified products thereof (modified waxes).

Examples of the natural wax may include: animal-based waxes, such as beeswax, a spermaceti wax and lanolin; plant-based waxes, such as a Japan wax, a carnauba wax, a sugar cane wax, a palm wax, a candelilla wax and a rice wax; mineral-based waxes such as a montan wax; and petroleum-based waxes, such as a paraffin wax, a microcrystalline wax and petrolatum. Examples of the synthetic wax may include hydrocarbon-based waxes, such as a Fischer-Tropsch wax and polyolefin waxes (e.g., polyethylene wax and polypropylene wax). The blended waxes are mixtures of the above-mentioned various waxes. The modified waxes are obtained by subjecting the above-mentioned various waxes to modification treatment, such as oxidation, hydrogenation, alcohol modification, acrylic modification or urethane modification. The above-mentioned waxes may be used alone or in combination thereof. The wax is preferably at least one kind selected from the group consisting of: a microcrystalline wax; a Fischer-Tropsch wax; a polyolefin wax; a paraffin wax; and modified products and blends thereof. Of those, a blend of a plurality of kinds of waxes is more preferable, and a blend of a petroleum-based wax and a synthetic wax is particularly preferable.

In addition, the wax particle is preferably a particle formed of a wax containing an oxidized wax. The surface of the wax particle formed of the oxidized wax is more hydrophilic. Thus, through use of the wax particle formed of the oxidized wax, the fusion-suppressing effect can be further enhanced.

The wax particle is preferably solid at a normal temperature (25°C). The melting point Tw (°C) of the wax particle is preferably 120°C or less, more preferably 100°C or less. The melting point of the wax particle may be measured in conformity with a test method described in the section 5.3.1 (Melting Point Testing Method) of JIS K 2235:1991 (Petroleum Waxes). In the cases of a microcrystalline wax, petrolatum and a mixture of a plurality of kinds of waxes, their melting points may be measured with higher accuracy by utilizing a test method described in the section 5.3.2 thereof. The melting point of the wax particle is susceptible to characteristics, such as a molecular weight of the wax (a larger molecular weight provides a higher melting point), a molecular structure (a linear structure provides a higher melting point but a branched structure provides a lower melting point), crystallinity (higher crystallinity provides a higher melting point) and a density (a higher density provides a higher melting point). Accordingly, the control of those characteristics can provide a wax particle having a desired melting point. The melting point of the wax particle in the ink may be measured, for example, as follows: after the wax particle fractionated by subjecting the ink to ultracentrifugation treatment has been washed and dried, its melting point is measured in conformity with each of the above-mentioned test methods.

The cumulative 50% particle diameter in volume-based particle size distribution (D₅₀) of the wax particle is preferably 150 nm or more. The cumulative 50% particle diameter in volume-based particle size distribution of the wax particle may be measured by the same method as that in the case of the above-mentioned cumulative 50% particle diameter in volume-based particle size distribution of the resin particle. When the cumulative 50% particle diameter in volume-based particle size distribution of the wax particle is less than 150 nm, the suppressing effect on the fusion of the wax particle may slightly decrease. The cumulative 50% particle diameter in volume-based particle size distribution (D₅₀) of the wax particle is preferably 250 nm or less, more preferably 200 nm or less. The cumulative 50% particle diameter in volume-based particle size distribution (D₅₀) of the wax particle may be measured by a dynamic light scattering method, and the measurement conditions and device may be set to be the same as those in the above-mentioned measurement method regarding the resin.

### [Aqueous Medium]

The ink to be used in the recording method of the present disclosure is an aqueous ink containing at least water as an aqueous medium. An aqueous medium that is the water or a mixed solvent of the water and a water-soluble organic solvent may be incorporated into the ink. Deionized water or ion-exchanged water is preferably used as the water. The content (% by mass) of the water in the aqueous ink is preferably 50.00% by mass or more to 95.00% by mass or less with respect to the total mass of the ink. In addition, the content (% by mass) of the water-soluble organic solvent in the aqueous ink is preferably 2.00% by mass or more to 40.00% by mass or less with respect to the total mass of the ink. Solvents that may be used in an ink for ink jet, such as alcohols, (poly)alkylene glycols, glycol ethers, nitrogen-containing solvents and sulfur-containing solvents, may each be used as the water-soluble organic solvent. The water-soluble organic solvents may be used alone or in combination thereof.

### [Water-soluble Hydrocarbon Compound]

The water-soluble organic solvent preferably contains a specific water-soluble hydrocarbon compound. The water-soluble hydrocarbon compound is a compound having a hydrocarbon chain having 3 or more carbon atoms, the compound being substituted with 2 or more hydrophilic groups each selected from the group consisting of: a hydroxy group; an amino group; and an anionic group. However, the hydrocarbon chain may be interrupted by a sulfonyl group or an ether group. When the number of the carbon atoms of the hydrocarbon chain is 3 or 4, the hydrophilic groups include an anionic group or the hydrocarbon chain is interrupted by a sulfonyl group.

In the present disclosure, a hydrocarbon compound in a state of being dissolved in water at a content of the compound in the ink at 25°C is defined as being "water-soluble". That is, the solubility of the compound in water at 25°C is larger than the content thereof in the ink. The fact that the hydrocarbon chain is interrupted by a sulfonyl group or an ether group means that a sulfonyl group (-S(=O)₂-) or an ether group (-O-) is present in the middle of the hydrocarbon chain. The water-soluble hydrocarbon compound has hydrogen-bonding groups, such as a hydroxy group, an amino group, an anionic group, a sulfonyl group and an ether group. Accordingly, the use of the ink containing the hydrocarbon compound can suppress the cockling or curl of a recording medium having recorded thereon an image. A general hydrocarbon compound having a hydrocarbon chain having a relatively small number of carbon atoms (3 or 4 carbon atoms) tends to have a small molecular weight and hence have a low vapor pressure. However, the above-mentioned water-soluble hydrocarbon compound has a hydrogen-bonding anionic group or its hydrocarbon chain is interrupted by a sulfonyl group. Accordingly, the compound hardly evaporates owing to an intermolecular or intramolecular interaction and hence remains between fibers to exhibit a suppressing action on the cockling or the curl. The content (% by mass) of the water-soluble hydrocarbon compound in the ink is preferably 1.00% by mass or more to 20.00% by mass or less with respect to the total mass of the ink.

The number of the carbon atoms of the hydrocarbon chain for forming the water-soluble hydrocarbon compound is preferably 3 or more to 50 or less, more preferably 3 or more to 10 or less. Examples of the anionic group may include a sulfonic acid group and a carboxylic acid group. Specific examples of the water-soluble hydrocarbon compound may include: alkanediols, such as 1,5-pentanediol and 1,6-hexanediol; amino acids, such as alanine, β-alanine, trimethylglycine, amidosulfuric acid (alias: sulfamic acid), aminomethanesulfonic acid, taurine (alias: 2-aminoethanesulfonic acid), carbamic acid, glycine, aspartic acid, glutamic acid, sulfanilic acid or salts of any of the acids described above, phenylalanine, leucine, isoleucine, threonine, tryptophan, valine, methionine, lysine and arginine; sulfonyl compounds such as bis(2-hydroxyethyl)sulfone; alkylene glycols, such as triethylene glycol, tetraethylene glycol, tripropylene glycol and a polyethylene glycol having a number-average molecular weight of from about 200 to about 1,000; and sugars, such as sorbitol, D-sorbitol, xylitol, trehalose, fructose and D(+)-xylose. The water-soluble hydrocarbon compounds may be used alone or in combination thereof.

### [Surfactant]

The ink preferably further contains a nonionic surfactant. The nonionic surfactant is easily adsorbed to the surface of the resin particle. Accordingly, the fusion of the resin particle can be further suppressed, and hence the ejection stability can be further improved. In addition, the content (% by mass) of the nonionic surfactant in the ink is preferably 0.10 times or more in terms of mass ratio with respect to the content (% by mass) of the resin particle therein because such suppressing effect on the fusion of the resin particle is easily obtained and hence the ejection stability can be further improved. In addition, the above-mentioned mass ratio is preferably 1.00 times or less, more preferably 0.30 times or less.

### [Other Components]

The ink may contain various other components as required. Examples of the other components may include various additives, such as an antifoaming agent, a pH adjuster, a viscosity modifier, a rust inhibitor, an antiseptic, a fungicide, an antioxidant and an anti-reducing agent.

### [Physical Properties of Ink]

The ink is an aqueous ink to be applied to an ink jet system. Accordingly, from the viewpoint of reliability, it is preferable that the physical property values of the ink be appropriately controlled. The viscosity of the ink at 25°C is preferably 1.0 mPa·s or more to 10.0 mPa·s or less. The viscosity of the ink at 25°C may be measured with a rotary viscometer. The viscosity of the ink may be adjusted with, for example, a water-soluble organic solvent, a resin or a surfactant.

The surface tension of the ink at 25°C is preferably 20 mN/m or more to 60 mN/m or less. The surface tension of the ink at 25°C may be measured by a plate method or the like. In addition, the pH of the ink at 25°C is preferably 7.0 or more to 9.5 or less, more preferably 8.0 or more to 9.5 or less. The pH of the ink may be measured with a general pH meter having a glass electrode or the like mounted thereon.

### EXAMPLES

The present disclosure is described in more detail below by way of Examples and Comparative Examples. The present disclosure is by no means limited to Examples below without departing from the gist of the present disclosure. "Part(s)" and "%" with regard to the description of the amounts of components are by mass unless otherwise stated.

### <Preparation of Pigment Dispersion Liquid>

### (Pigment Dispersion Liquid 1)

15.0 Parts of a pigment, 15.0 parts of an aqueous solution of a resin dispersant and 70.0 parts of water were mixed and dispersed with a sand grinder for 1 hour. After that, a non-dispersed substance containing a coarse particle was removed by centrifugation. As the pigment, carbon black (product name "Printex 85", manufactured by Orion Engineered Carbons) was used. As the aqueous solution of the resin dispersant, an aqueous solution having a content of a resin (solid content) of 20.0%, which was obtained by neutralizing a styrene-acrylic acid copolymer with a 10% potassium hydroxide aqueous solution in an amount equimolar to an acid value and adding an appropriate amount of ion-exchanged water, was used. The acid value of the styrene-acrylic acid copolymer was 150 mgKOH/g, and the weight-average molecular weight thereof was 8,000. After the resultant was filtered under pressure through a microfilter (manufactured by FUJIFILM Corporation) having a pore size of 3.0 µm, an appropriate amount of ion-exchanged water was added to prepare a pigment dispersion liquid 1. The content of the pigment in the pigment dispersion liquid 1 was 15.00%, and the content of the resin in the pigment dispersion liquid 1 was 3.00%.

### (Pigment Dispersion Liquid 2)

A pigment dispersion liquid 2 was obtained in the same manner as in the case of the above-mentioned pigment dispersion liquid 1 except that C.I. Pigment Blue 15:3 was used as the pigment. The content of the pigment in the resultant pigment dispersion liquid 2 was 15.00%, and the content of the resin in the resultant pigment dispersion liquid 2 was 3.00%.

### (Pigment Dispersion Liquid 3)

A pigment dispersion liquid 3 was obtained in the same manner as in the case of the above-mentioned pigment dispersion liquid 1 except that C.I. Pigment Red 122 was used as the pigment. The content of the pigment in the resultant pigment dispersion liquid 3 was 15.00%, and the content of the resin in the resultant pigment dispersion liquid 3 was 3.00%.

### (Pigment Dispersion Liquid 4)

A pigment dispersion liquid 4 was obtained in the same manner as in the case of the above-mentioned pigment dispersion liquid 1 except that C.I. Pigment Yellow 74 was used as the pigment. The content of the pigment in the resultant pigment dispersion liquid 4 was 15.00%, and the content of the resin in the resultant pigment dispersion liquid 4 was 3.00%.

### (Pigment Dispersion Liquid 5)

A self-dispersible pigment (product name "Cab-O-Jet 300", manufactured by Cabot Corporation) in which a benzene carboxylic acid group was bonded to the particle surface of carbon black was prepared. The prepared self-dispersible pigment was diluted with water and thoroughly stirred to provide a pigment dispersion liquid 5 having a content of a pigment of 15.00%.

### <Preparation of Water-soluble Resin>

100.0 Parts of ethylene glycol monobutyl ether was loaded into a four-necked flask including a temperature gauge, a stirring machine, a nitrogen gas inlet tube and a reflux tube. After that, a nitrogen gas was introduced into the flask, and a temperature in the flask was increased to 110°C under stirring. A monomer solution in which 50 parts of styrene, 32 parts of n-butyl acrylate, 18 parts of methacrylic acid and 1.3 parts of a polymerization initiator (t-butyl peroxide) were dissolved in ethylene glycol monobutyl ether was prepared. The prepared monomer solution was added dropwise into the flask over 3 hours. After stirring for 2 hours, ethylene glycol monobutyl ether was removed under reduced pressure. Thus, a water-soluble resin was obtained. The resultant water-soluble resin was neutralized with potassium hydroxide in an amount 1.0 times (molar ratio) as large as its acid value, and then an appropriate amount of ion-exchanged water was added to dissolve the water-soluble resin at 80°C. Thus, an aqueous solution of the water-soluble resin having a resin content of 15.00% was obtained.

### <Preparation of Resin Particles>

### (Resin Particles 1 to 5 and 8 to 19)

Potassium persulfate and ion-exchanged water whose amounts were shown in Table 1 (Table 1-1 and Table 1-2) were loaded into a four-necked flask including a stirring machine, a reflux condenser and a nitrogen gas inlet tube, and a nitrogen gas was introduced into the flask. In addition, monomers whose kinds and usage amounts were shown in Table 1 were mixed to provide a mixture. The meanings of abbreviations in Table 1 are shown below.
·BMA: n-butyl methacrylate
·EMA: ethyl methacrylate
·CHMA: cyclohexyl methacrylate
·MAA: methacrylic acid
·EDMA: ethylene glycol dimethacrylate
·BDDA: 1,4-butanediol diacrylate
·PEGDMA: polyethylene glycol dimethacrylate (n=4)
·Aqualon KH-05 (product name, manufactured by DKS Co., Ltd.): anionic reactive surfactant
·Blemmer PME 1000: nonionic reactive surfactant

The resultant mixture was added dropwise to the four-necked flask over 1 hour under stirring, and then subjected to a reaction at a temperature of 80°C for 2 hours. After that, the contents were cooled to room temperature, and potassium hydroxide and an appropriate amount of ion-exchanged water were added to adjust the pH of the liquid to 8.5. Thus, a water dispersion liquid having a resin particle content of 40.0% was obtained. The characteristics of the resultant resin particle are shown in Table 2.

The anionic group amount of the resin particle was measured and calculated as described below. Hydrochloric acid was added to the water dispersion liquid of the resin particle until the pH became 2 or less, followed by stirring for 24 hours. After that, a precipitate was separated by centrifugation and dried to provide a resin. 1 g of the resultant resin was pulverized, and 30 g of a 0.1 mol/L sodium hydrogen carbonate aqueous solution was added thereto, followed by stirring for 15 hours. After that, a supernatant was separated by centrifugation. Pure water was added to 1 g of the separated supernatant to prepare 15 g of a sample. The resultant sample was titrated with 0.1 mol/L hydrochloric acid through use of an automatic potentiometric titrator (product name: "AT510", manufactured by Kyoto Electronics Manufacturing Co., Ltd.), and the anionic group amount per unit mass of the resin particle was calculated from the measured value.

The glass transition temperature of the resin particle was measured according to the following procedure. First, a water dispersion liquid of a resin particle was heated to 60°C and dried to solidity, and the dried product was sealed in an aluminum container to provide a sample. Next, through use of a differential scanning calorimeter (product name: "DSC Q1000", manufactured by TA Instruments), the temperature of the sample was increased to 200°C at 10°C/min, decreased to -50°C at 5°C/min, and increased to 200°C at 10°C/min, and a glass transition temperature T_{g} (°C) was measured.

**Table 1-1: Compositions of Resin Particles 1 to 5 and 8 to 19**

| Resin particle | Potassium persulfate (part) | Ion-exchanged water (parts) | Usage amount of monomer (part(s)) | | | |
|---|---|---|---|---|---|---|
| | | | BMA | EMA | CHMA | MAA |
| 1 | 0.2 | 47.5 | 20.0 | 30.0 | | 1.2 |
| 2 | 0.2 | 47.5 | 35.0 | 15.0 | | 1.2 |
| 3 | 0.2 | 47.5 | 32.0 | 18.0 | | 1.2 |
| 4 | 0.2 | 47.5 | 5.0 | 35.0 | 10.0 | 1.2 |
| 5 | 0.2 | 47.5 | 3.0 | 37.0 | 10.0 | 1.2 |
| 8 | 0.2 | 47.5 | 20.0 | 30.0 | | |
| 9 | 0.2 | 48.2 | 20.0 | 30.0 | | 0.5 |
| 10 | 0.2 | 48.1 | 20.0 | 30.0 | | 0.6 |
| 11 | 0.2 | 46.5 | 20.0 | 30.0 | | 2.2 |
| 12 | 0.2 | 46.4 | 20.0 | 30.0 | | 2.3 |
| 13 | 0.2 | 48.3 | 20.0 | 30.0 | | 1.2 |
| 14 | 0.2 | 48.1 | 20.0 | 30.0 | | 1.2 |
| 15 | 0.2 | 48.0 | 20.0 | 30.0 | | 1.2 |
| 16 | 0.2 | 46.7 | 20.0 | 30.0 | | 1.2 |
| 17 | 0.2 | 46.6 | 20.0 | 30.0 | | 1.2 |
| 18 | 0.2 | 47.5 | 20.0 | 30.0 | | 1.2 |
| 19 | 0.2 | 47.5 | 20.0 | 30.0 | | 1.2 |

**Table 1-2: Compositions of Resin Particles 1 to 5 and 8 to 19**

| Resin particle | Usage amount of monomer (part(s)) | | | | |
|---|---|---|---|---|---|
| | Cross-linkable monomer | | | Aqualon KH-05 | Blemmer PME 1000 |
| | EDMA | BDDA | PEGDMA | | |
| 1 | 0.80 | | | 0.3 | |
| 2 | 0.80 | | | 0.3 | |
| 3 | 0.80 | | | 0.3 | |
| 4 | 0.80 | | | 0.3 | |
| 5 | 0.80 | | | 0.3 | |
| 8 | 0.80 | | | | 1.5 |
| 9 | 0.80 | | | 0.3 | |
| 10 | 0.80 | | | 0.3 | |
| 11 | 0.80 | | | 0.3 | |
| 12 | 0.80 | | | 0.3 | |
| 13 | 0.00 | | | 0.3 | |
| 14 | 0.20 | | | 0.3 | |
| 15 | 0.28 | | | 0.3 | |
| 16 | 1.60 | | | 0.3 | |
| 17 | 1.70 | | | 0.3 | |
| 18 | | | 0.80 | 0.3 | |
| 19 | | 0.80 | | 0.3 | |

**Table 2: Characteristics of Resin Particles 1 to 5 and 8 to 19**

| Resin particle | Anionic group amount (µmol/g) | Glass transition temperature Tg (°C) | Cross-linking | Ratio of cross-linking unit (%) |
|---|---|---|---|---|
| 1 | 105 | 61 | Present | 1.5 |
| 2 | 108 | 48 | Present | 1.5 |
| 3 | 108 | 50 | Present | 1.5 |
| 4 | 110 | 80 | Present | 1.5 |
| 5 | 107 | 82 | Present | 1.5 |
| 8 | 0 | 60 | Present | 1.5 |
| 9 | 44 | 58 | Present | 1.6 |
| 10 | 50 | 60 | Present | 1.5 |
| 11 | 200 | 61 | Present | 1.5 |
| 12 | 203 | 61 | Present | 1.5 |
| 13 | 110 | 59 | Absent | 0.0 |
| 14 | 101 | 61 | Present | 0.4 |
| 15 | 109 | 60 | Present | 0.5 |
| 16 | 104 | 59 | Present | 3.0 |
| 17 | 112 | 63 | Present | 3.2 |
| 18 | 109 | 61 | Present | 1.5 |
| 19 | 104 | 62 | Present | 1.5 |

### (Resin Particle 6)

A stirring machine (product name: "Tornado Stirrer Standard SM-104", manufactured by AS ONE Corporation) was set in a beaker having a volume of 300 mL. 100 g of a water dispersion liquid of a polyester resin particle and 0.5 g of a cross-linking agent were loaded into the beaker, followed by stirring at 80°C for 6 hours. A product available under the product name "Vylonal MD-1245" (manufactured by Toyobo Co., Ltd., resin particle content: 30.0%) was used as the water dispersion liquid of the polyester resin particle. In addition, ethylene glycol glycidyl ether (product name: "Denacol EX-810", manufactured by Nagase ChemteX Corporation) was used as the cross-linking agent. After that, pressure filtration was performed with a microfilter (manufactured by FUJIFILM Corporation) having a pore size of 3.0 µm. Next, an appropriate amount of deionized water was added to adjust the resin particle content. Thus, a water dispersion liquid of a resin particle 6 having a polyester resin particle content of 25.0% was obtained. The anionic group amount of the resultant resin particle 6 was 53 µmol/g, the glass transition temperature T_{g} was 60°C, and the ratio of a cross-linking unit was 1.5%.

### (Resin Particle 7)

A separable flask including a stirring machine, a temperature gauge and a reflux tube, and having a volume of 1 L was prepared. A mixture of 100 g of a polycarbonate diol, 4.2 g of 2,2-bis(hydroxymethyl)propionic acid, 41 g of 4,4'-dicyclohexylmethane diisocyanate, 2.2 g of triethylamine and 80 g of acetone was prepared. A product available under the product name "T-5650E" from Asahi Kasei Corporation was used as the polycarbonate diol. After the loading of the mixture into the flask under a nitrogen atmosphere, one drop of a catalyst (tin(II) di(2-ethylhexanoate)) was added, and the mixture was subjected to a reaction at 80°C for 15 hours. After cooling to 40°C, water was added to the flask under stirring at a rotation speed of 300 rpm to prepare a particulate urethane resin. After stirring at 40°C for 30 minutes, 1.2 g of diethylenetriamine was added, followed by stirring at 40°C for 6 hours. Acetone was evaporated, and then deionized water was added to adjust the resin content to 30.0%. Thus, a water dispersion liquid of a resin particle 7, which was a resin particle formed of the urethane resin, was obtained. The anionic group amount of the resultant resin particle 7 was 125 µmol/g, the glass transition temperature T_{g} was 64°C, and the ratio of a cross-linking unit was 0.8%.

### <Preparation of Inks>

Respective components (unit: %) shown in the middle section of Table 3 (Table 3-1 to Table 3-7) were mixed and thoroughly stirred. After that, the mixture was filtered under pressure with a cellulose acetate filter (manufactured by Advantec) having a pore size of 3.0 µm to prepare each ink. The physical properties and the like of each of the prepared inks are shown in the lower section of Table 3. In Table 3, nonionic surfactants indicated by product names are as described below.
·Acetylenol E100: ethylene oxide adduct of acetylene glycol (manufactured by Kawaken Fine Chemicals Co., Ltd.)
·BYK348: silicone-based surfactant (manufactured by BYK-Chemie) ·Surfynol 420: ethylene oxide adduct of acetylene glycol (manufactured by Nissin Chemical Industry Co., Ltd.)
·Capstone FS-3100: fluorine-based surfactant (manufactured by Chemours)

**Table 3-1: Compositions and characteristics of inks**

| | Ink | | | | | |
|---|---|---|---|---|---|---|
| | 1 | 2 | 3 | 4 | 5 | 6 |
| Kind of pigment dispersion liquid | 1 | 2 | 3 | 4 | 5 | 1 |
| Kind of resin particle | 1 | 1 | 1 | 1 | 1 | 1 |
| Pigment dispersion liquid | 20.00 | 20.00 | 20.00 | 20.00 | 20.00 | 20.00 |
| Water dispersion liquid of resin particle | 20.00 | 20.00 | 20.00 | 20.00 | 20.00 | 20.00 |
| Aqueous solution of water-soluble resin | | | | | | |
| 1,2-Butanediol | 19.00 | 19.00 | 19.00 | 19.00 | 19.00 | 19.00 |
| 1,2-Hexanediol | 1.00 | 1.00 | 1.00 | 1.00 | 1.00 | 1.00 |
| 1,2-Propanediol | | | | | | |
| 1,3-Propanediol | | | | | | |
| Acetylenol E100 | 1.00 | 1.00 | 1.00 | 1.00 | 1.00 | |
| BYK348 | | | | | | 1.00 |
| Surfynol 420 | | | | | | |
| Capstone FS-3100 | | | | | | |
| Sodium dodecyl sulfate | | | | | | |
| Ion-exchanged water | 39.00 | 39.00 | 39.00 | 39.00 | 39.00 | 39.00 |
| Content P of pigment (%) | 3.00 | 3.00 | 3.00 | 3.00 | 3.00 | 3.00 |
| Content Em of resin particle (%) | 8.00 | 8.00 | 8.00 | 8.00 | 8.00 | 8.00 |
| Content S of nonionic surfactant (%) | 1.00 | 1.00 | 1.00 | 1.00 | 1.00 | 1.00 |
| Value of P/Em (times) | 0.38 | 0.38 | 0.38 | 0.38 | 0.38 | 0.38 |
| Value of S/Em (times) | 0.13 | 0.13 | 0.13 | 0.13 | 0.13 | 0.13 |

**Table 3-2: Compositions and characteristics of inks**

| | Ink | | | | | |
|---|---|---|---|---|---|---|
| | 7 | 8 | 9 | 10 | 11 | 12 |
| Kind of pigment dispersion liquid | 1 | 1 | 1 | 1 | 1 | - |
| Kind of resin particle | 1 | 1 | 1 | 1 | 1 | 1 |
| Pigment dispersion liquid | 20.00 | 20.00 | 20.00 | 20.00 | 20.00 | |
| Water dispersion liquid of resin particle | 20.00 | 20.00 | 20.00 | 20.00 | 20.00 | 20.00 |
| Aqueous solution of water-soluble resin | | | | | | |
| 1,2-Butanediol | 19.00 | 19.00 | 19.00 | | | 19.00 |
| 1,2-Hexanediol | 1.00 | 1.00 | 1.00 | 1.00 | 1.00 | 1.00 |
| 1,2-Propanediol | | | | 19.00 | | |
| 1,3-Propanediol | | | | | 19.00 | |
| Acetylenol E100 | | | | 1.00 | 1.00 | 1.00 |
| BYK348 | | | | | | |
| Surfynol 420 | 1.00 | | | | | |
| Capstone FS-3100 | | 1.00 | | | | |
| Sodium dodecyl sulfate | | | 1.00 | | | |
| Ion-exchanged water | 39.00 | 39.00 | 39.00 | 39.00 | 39.00 | 59.00 |
| Content P of pigment (%) | 3.00 | 3.00 | 3.00 | 3.00 | 3.00 | 0.00 |
| Content Em of resin particle (%) | 8.00 | 8.00 | 8.00 | 8.00 | 8.00 | 8.00 |
| Content S of nonionic surfactant (%) | 1.00 | 1.00 | 1.00 | 1.00 | 1.00 | 1.00 |
| Value of P/Em (times) | 0.38 | 0.38 | 0.38 | 0.38 | 0.38 | 0.00 |
| Value of S/Em (times) | 0.13 | 0.13 | 0.13 | 0.13 | 0.13 | 0.13 |

**Table 3-3: Compositions and characteristics of inks**

| | Ink | | | | | |
|---|---|---|---|---|---|---|
| | 13 | 14 | 15 | 16 | 17 | 18 |
| Kind of pigment dispersion liquid | 1 | 1 | 1 | 1 | 1 | 1 |
| Kind of resin particle | 1 | 1 | 1 | 1 | 1 | 1 |
| Pigment dispersion liquid | 5.00 | 5.30 | 40.00 | 20.00 | 20.00 | 20.00 |
| Water dispersion liquid of resin particle | 20.00 | 20.00 | 15.00 | 20.00 | 20.00 | 20.00 |
| Aqueous solution of water-soluble resin | | | | | | |
| 1,2-Butanediol | 19.00 | 19.00 | 19.00 | 19.00 | 19.00 | 19.00 |
| 1,2-Hexanediol | 1.00 | 1.00 | 1.00 | 1.00 | 1.00 | 1.00 |
| 1,2-Propanediol | | | | | | |
| 1,3-Propanediol | | | | | | |
| Acetylenol E100 | 1.00 | 1.00 | 1.00 | | 0.70 | 0.80 |
| BYK348 | | | | | | |
| Surfynol 420 | | | | | | |
| Capstone FS-3100 | | | | | | |
| Sodium dodecyl sulfate | | | | | | |
| Ion-exchanged water | 54.00 | 53.70 | 24.00 | 40.00 | 39.30 | 39.20 |
| Content P of pigment (%) | 0.75 | 0.80 | 6.00 | 3.00 | 3.00 | 3.00 |
| Content Em of resin particle (%) | 8.00 | 8.00 | 6.00 | 8.00 | 8.00 | 8.00 |
| Content S of nonionic surfactant (%) | 1.00 | 1.00 | 1.00 | 0.00 | 0.70 | 0.80 |
| Value of P/Em (times) | 0.09 | 0.10 | 1.00 | 0.38 | 0.38 | 0.38 |
| Value of S/Em (times) | 0.13 | 0.13 | 0.17 | 0.00 | 0.09 | 0.10 |

**Table 3-4: Compositions and characteristics of inks**

| | Ink | | | | | |
|---|---|---|---|---|---|---|
| | 19 | 20 | 21 | 22 | 23 | 24 |
| Kind of pigment dispersion liquid | 1 | 1 | 1 | 1 | 1 | 1 |
| Kind of resin particle | 1 | 2 | 3 | 4 | 5 | 1 |
| Pigment dispersion liquid | 20.00 | 20.00 | 20.00 | 20.00 | 20.00 | 20.00 |
| Water dispersion liquid of resin particle | 15.00 | 20.00 | 20.00 | 20.00 | 20.00 | 14.50 |
| Aqueous solution of water-soluble resin | | | | | | |
| 1,2-Butanediol | 19.00 | 19.00 | 19.00 | 19.00 | 19.00 | 19.00 |
| 1,2-Hexanediol | 1.00 | 1.00 | 1.00 | 1.00 | 1.00 | 1.00 |
| 1,2-Propanediol | | | | | | |
| 1,3-Propanediol | | | | | | |
| Acetylenol E100 | 1.80 | 1.00 | 1.00 | 1.00 | 1.00 | 1.00 |
| BYK348 | | | | | | |
| Surfynol 420 | | | | | | |
| Capstone FS-3100 | | | | | | |
| Sodium dodecyl sulfate | | | | | | |
| Ion-exchanged water | 43.20 | 39.00 | 39.00 | 39.00 | 39.00 | 44.50 |
| Content P of pigment (%) | 3.00 | 3.00 | 3.00 | 3.00 | 3.00 | 3.00 |
| Content Em of resin particle (%) | 6.00 | 8.00 | 8.00 | 8.00 | 8.00 | 5.80 |
| Content S of nonionic surfactant (%) | 1.80 | 1.00 | 1.00 | 1.00 | 1.00 | 1.00 |
| Value of P/Em (times) | 0.50 | 0.38 | 0.38 | 0.38 | 0.38 | 0.52 |
| Value of S/Em (times) | 0.30 | 0.13 | 0.13 | 0.13 | 0.13 | 0.17 |

**Table 3-5: Compositions and characteristics of inks**

| | Ink | | | | | |
|---|---|---|---|---|---|---|
| | 25 | 26 | 27 | 28 | 29 | 30 |
| Kind of pigment dispersion liquid | 1 | 1 | 1 | 1 | 1 | 1 |
| Kind of resin particle | 1 | 1 | 1 | 6 | 7 | 8 |
| Pigment dispersion liquid | 20.00 | 20.00 | 20.00 | 20.00 | 20.00 | 20.00 |
| Water dispersion liquid of resin particle | 15.00 | 37.50 | 38.00 | 32.00 | 32.00 | 20.00 |
| Aqueous solution of water-soluble resin | | | | | | |
| 1,2-Butanediol | 19.00 | 19.00 | 19.00 | 19.00 | 19.00 | 19.00 |
| 1,2-Hexanediol | 1.00 | 1.00 | 1.00 | 1.00 | 1.00 | 1.00 |
| 1,2-Propanediol | | | | | | |
| 1,3-Propanediol | | | | | | |
| Acetylenol E100 | 1.00 | 1.50 | 1.50 | 1.50 | 1.50 | 1.00 |
| BYK348 | | | | | | |
| Surfynol 420 | | | | | | |
| Capstone FS-3100 | | | | | | |
| Sodium dodecyl sulfate | | | | | | |
| Ion-exchanged water | 44.00 | 21.00 | 20.50 | 26.50 | 26.50 | 39.00 |
| Content P of pigment (%) | 3.00 | 3.00 | 3.00 | 3.00 | 3.00 | 3.00 |
| Content Em of resin particle (%) | 6.00 | 15.00 | 15.20 | 8.00 | 8.00 | 8.00 |
| Content S of nonionic surfactant (%) | 1.00 | 1.50 | 1.50 | 1.50 | 1.50 | 1.00 |
| Value of P/Em (times) | 0.50 | 0.20 | 0.20 | 0.38 | 0.38 | 0.38 |
| Value of S/Em (times) | 0.17 | 0.10 | 0.10 | 0.19 | 0.19 | 0.13 |

**Table 3-6: Compositions and characteristics of inks**

| | Ink | | | | | |
|---|---|---|---|---|---|---|
| | 31 | 32 | 33 | 34 | 35 | 36 |
| Kind of pigment dispersion liquid | 1 | 1 | 1 | 1 | 1 | 1 |
| Kind of resin particle | 9 | 10 | 11 | 12 | 13 | 14 |
| Pigment dispersion liquid | 20.00 | 20.00 | 20.00 | 20.00 | 20.00 | 20.00 |
| Water dispersion liquid of resin particle | 20.00 | 20.00 | 20.00 | 20.00 | 20.00 | 20.00 |
| Aqueous solution of water-soluble resin | | | | | | |
| 1,2-Butanediol | 19.00 | 19.00 | 19.00 | 19.00 | 19.00 | 19.00 |
| 1,2-Hexanediol | 1.00 | 1.00 | 1.00 | 1.00 | 1.00 | 1.00 |
| 1,2-Propanediol | | | | | | |
| 1,3-Propanediol | | | | | | |
| Acetylenol E100 | 1.00 | 1.00 | 1.00 | 1.00 | 1.00 | 1.00 |
| BYK348 | | | | | | |
| Surfynol 420 | | | | | | |
| Capstone FS-3100 | | | | | | |
| Sodium dodecyl sulfate | | | | | | |
| Ion-exchanged water | 39.00 | 39.00 | 39.00 | 39.00 | 39.00 | 39.00 |
| Content P of pigment (%) | 3.00 | 3.00 | 3.00 | 3.00 | 3.00 | 3.00 |
| Content Em of resin particle (%) | 8.00 | 8.00 | 8.00 | 8.00 | 8.00 | 8.00 |
| Content S of nonionic surfactant (%) | 1.00 | 1.00 | 1.00 | 1.00 | 1.00 | 1.00 |
| Value of P/Em (times) | 0.38 | 0.38 | 0.38 | 0.38 | 0.38 | 0.38 |
| Value of S/Em (times) | 0.13 | 0.13 | 0.13 | 0.13 | 0.13 | 0.13 |

**Table 3-7: Compositions and characteristics of inks**

| | Ink | | | | | | |
|---|---|---|---|---|---|---|---|
| | 37 | 38 | 39 | 40 | 41 | 42 | 43 |
| Kind of pigment dispersion liquid | 1 | 1 | 1 | 1 | 1 | 1 | 1 |
| Kind of resin particle | 15 | 16 | 17 | 18 | 19 | - | - |
| Pigment dispersion liquid | 20.00 | 20.00 | 20.00 | 20.00 | 20.00 | 20.00 | 20.00 |
| Water dispersion liquid of resin particle | 20.00 | 20.00 | 20.00 | 20.00 | 20.00 | | |
| Aqueous solution of water-soluble resin | | | | | | | 20.00 |
| 1,2-Butanediol | 19.00 | 19.00 | 19.00 | 19.00 | 19.00 | 19.00 | 19.00 |
| 1,2-Hexanediol | 1.00 | 1.00 | 1.00 | 1.00 | 1.00 | 1.00 | 1.00 |
| 1,2-Propanediol | | | | | | | |
| 1,3-Propanediol | | | | | | | |
| Acetylenol E100 | 1.00 | 1.00 | 1.00 | 1.00 | 1.00 | 1.00 | 1.00 |
| BYK348 | | | | | | | |
| Surfynol 420 | | | | | | | |
| Capstone FS-3100 | | | | | | | |
| Sodium dodecyl sulfate | | | | | | | |
| Ion-exchanged water | 39.00 | 39.00 | 39.00 | 39.00 | 39.00 | 59.00 | 39.00 |
| Content P of pigment (%) | 3.00 | 3.00 | 3.00 | 3.00 | 3.00 | 3.00 | 3.00 |
| Content Em of resin particle (%) | 8.00 | 8.00 | 8.00 | 8.00 | 8.00 | 0.00 | 0.00 |
| Content S of nonionic surfactant (%) | 1.00 | 1.00 | 1.00 | 1.00 | 1.00 | 1.00 | 1.00 |
| Value of P/Em (times) | 0.38 | 0.38 | 0.38 | 0.38 | 0.38 | - | - |
| Value of S/Em (times) | 0.13 | 0.13 | 0.13 | 0.13 | 0.13 | - | - |

### <Preparation of Reaction Liquid>

74.5 Parts of water, 5.0 parts of magnesium sulfate heptahydrate, 19.0 parts of 1,2-butanediol, 1.0 part of 1,2-hexanediol and 0.5 part of a nonionic surfactant (product name: "Acetylenol E100", manufactured by Kawaken Fine Chemicals Co., Ltd.) were mixed and thoroughly stirred. After that, pressure filtration was performed with a cellulose acetate filter (manufactured by Advantec) having a pore size of 3.0 µm to prepare a reaction liquid.

### <Recording Head>

Recording heads having configurations shown in Table 4 were produced. Abbreviations in Table 4 indicate the following respective polymers: PP: polypropylene, PE: polyethylene, FEP: fluorinated ethylene hexafluoropropylene copolymer and PS: polystyrene. The recording head in which the decompression chamber is arranged on the upper side in the vertical direction of the bubble retention chamber (part (a) of Fig. 6) and the recording head in which the decompression chamber is arranged to the side of the bubble retention chamber (part (b) of Fig. 6) are shown as "upper portion" and "side portion, "respectively, in the column of "Position of decompression chamber with respect to bubble retention chamber" in Table 4.

**Table 4: Configurations of recording heads**

| Recordin g head | Bubble retentio n chambe r | Decompressio n chamber | Position of decompressio n chamber with respect to bubble retention chamber | Gas permeable membrane | | |
|---|---|---|---|---|---|---|
| | | | | Membran e | Materia I | Thicknes s (mm) |
| 1 | Present | Present | Upper portion | Present | PP | 0.05 |
| 2 | Present | Present | Side portion | Present | PP | 0.05 |
| 3 | Present | Present | Upper portion | Present | PP | 0.10 |
| 4 | Present | Present | Upper portion | Present | PP | 0.20 |
| 5 | Present | Present | Upper portion | Present | PP | 0.008 |
| 6 | Present | Present | Upper portion | Present | PP | 0.01 |
| 7 | Present | Present | Upper portion | Present | PE | 0.05 |
| 8 | Present | Present | Upper portion | Present | FEP | 0.05 |
| 9 | Present | Present | Upper portion | Present | PS | 0.05 |
| 10 | Present | Present | - | Absent | - | - |
| 11 | Present | Absent | - | Absent | - | - |
| 12 | Present | Present | Upper portion | Present | FEP^{*1} | 0.002^{*1} |
| 13 | Present | Present | Upper portion | Absent | PP^{*2} | 1.00^{*2} |

| | | | | | | |
|---|---|---|---|---|---|---|
| *1: Regarding the "recording head 12," the material and thickness of a "hollow fiber membrane" are indicated. *2: Regarding the "recording head 13," the material and thickness of the "permeable partition wall" are indicated. | | | | | | |

### <Evaluation>

An ink jet recording apparatus (product name: "imagePROGRAF PRO-2000", manufactured by CANON KABUSHIKI KAISHA) in which each of recording heads whose kinds were shown in Table 5 (Table 5-1 to Table 5-6) was incorporated was prepared. In Examples, the recording duty of a solid image recorded under such a condition that one ink droplet having a mass of 4.0 ng per droplet is applied to a unit region measuring 1/1,200 inch by 1/1,200 inch is defined as 100%. The prepared reaction liquid and each of the prepared inks were loaded into an ink cartridge, and the ink cartridge was set in the ink jet recording apparatus so as to achieve a combination of the recording head and the ink shown in Table 5. Then, each of the following items was evaluated. In the present disclosure, in the following evaluation criteria of each of the items, the levels "AA", "A" and "B" were defined as acceptable levels, and the level "C" was defined as an unacceptable level. The evaluation results are shown in Table 5.

In Comparative Examples 7 and 8, an ink jet recording apparatus having a deaeration unit including a hollow fiber module arranged in a path for supplying an ink from an ink storage portion to a recording head was used with reference to the description in Japanese Patent Laid-Open No. 2015-058544. In Reference Example 1, an ink jet recording apparatus having a filter for trapping a bubble, which was arranged in a path for supplying an ink from an ink storage portion to a recording head, was used with reference to the description in Japanese Patent Laid-Open No. 2013-223980. In Reference Example 2, an ink jet recording apparatus having a deaerator including a partition formed of a hollow fiber membrane arranged inside a recording head was used with reference to the description in Japanese Patent Laid-Open No. 2011-173428. In Reference Example 3, an inkjet recording apparatus having a permeable partition wall having a thickness of 1.00 mm arranged inside a recording head instead of a gas permeable membrane was used with reference to the description in Japanese Patent Laid-Open No. 2008-173961.

### (Ejection Stability)

To reproduce the state after the use for a certain period of time, 0.3 mL of air was injected into the bubble retention chamber. The volume of the bubble retention chamber arranged in communication to the liquid retention chamber is 0.5 mL. The maximum temperature Ti (°C) of the ink in the bubble retention chamber was controlled to the temperature shown in Table 5 through utilization of a heater arranged in the recording head, and the decompression chamber was decompressed at the decompression degree shown in Table 5 for 10 days, and the air in the bubble retention chamber was transferred to the decompression chamber through the gas permeable membrane. After that, to reproduce the state after the use for a certain period of time, 0.3 mL of air was injected into the bubble retention chamber, and then a solid image measuring 15 cm by 25 cm was recorded onto 100 sheets of an A-4 size recording medium. When no decompression was performed, the evaluation was performed by the same procedure except that, after 0.3 mL of air had been injected into the liquid retention chamber, the maximum temperature Ti (°C) of the ink in the liquid retention chamber was set to the temperature shown in Table 5, and the apparatus was left to stand still for 10 days. "Scotchcal Graphic Film IJ1220-10" (product name, manufactured by 3M Company, material: polyvinyl chloride) was used as the recording medium. After that, the nozzle check pattern of imagePROGRAF PRO-2000 was recorded and the recorded nozzle check pattern was visually checked, and the ejection stability of the ink was evaluated in accordance with the following evaluation criteria.
AA: The number of ejection orifices in which non-ejection had occurred was 5 or less.
A: The number of ejection orifices in which non-ejection had occurred was 6 or more to 10 or less.
B: The number of ejection orifices in which non-ejection had occurred was 11 or more to 15 or less.
C: The number of ejection orifices in which non-ejection had occurred was 16 or more.

### (Abrasion Resistance)

A friction test was performed with a friction resistance tester (product name: "AB-301", manufactured by Tester Sangyo Co., Ltd.) that was a friction tester II (Gakushin type) in conformity with JIS L 0849. Specifically, the friction test was performed on the surface of the solid image recorded in the above-mentioned evaluation of the ejection stability through use of a cloth obtained by applying 1 g of water to a white cloth (cotton) for friction specified in JIS L 0803 under a load of 500 g with 30 and 50 reciprocating strokes. The image after the friction test was visually checked, and the abrasion resistance of the image was evaluated in accordance with the following evaluation criteria.
A: No abrasion was recognized in any of the image after 30 reciprocations or the image after 50 reciprocations.
B: Abrasion was recognized on the image after 50 reciprocations, but no abrasion was recognized on the image after 30 reciprocations.
C: Abrasion was recognized on the image after 30 reciprocations.

### (Suction Recovery Property)

After the elapse of 5 days from ink filling, a normal suction recovery operation was performed with a printer driver. After that, a nozzle check pattern of imagePROGRAF PRO-2000 was recorded on a recording medium. Plain paper (product name: "CS-068 A4", manufactured by CANON KABUSHIKI KAISHA) was used as the recording medium. The recorded nozzle check pattern was visually checked, and suction recovery property was evaluated in accordance with the following evaluation criteria.
A: The number of ejection orifices in which non-ejection had occurred was 15 or less.
C: The number of ejection orifices in which non-ejection had occurred was 16 or more.

**Table 5-1: Evaluation conditions and evaluation results**

| | | Evaluation conditions | | | | | | |
|---|---|---|---|---|---|---|---|---|
| | | Recording head | Ink | Tᵢ (°C) | T_{fix} (°C) | T_{g}-Tᵢ (°C) | T_{fix}-T_{g} (°C) | Degree of decompression (kPa) |
| | 1 | 1 | 1 | 40 | 80 | 21 | 19 | 50 |
| | 2 | 1 | 2 | 40 | 80 | 21 | 19 | 50 |
| | 3 | 1 | 3 | 40 | 80 | 21 | 19 | 50 |
| | 4 | 1 | 4 | 40 | 80 | 21 | 19 | 50 |
| | 5 | 1 | 5 | 40 | 80 | 21 | 19 | 50 |
| | 6 | 1 | 6 | 40 | 80 | 21 | 19 | 50 |
| | 7 | 1 | 7 | 40 | 80 | 21 | 19 | 50 |
| | 8 | 1 | 8 | 40 | 80 | 21 | 19 | 50 |
| | 9 | 1 | 9 | 40 | 80 | 21 | 19 | 50 |
| | 10 | 1 | 10 | 40 | 80 | 21 | 19 | 50 |
| | 11 | 1 | 11 | 40 | 80 | 21 | 19 | 50 |
| | 12 | 1 | 12 | 51 | 80 | 10 | 19 | 50 |
| | 13 | 1 | 13 | 40 | 80 | 21 | 19 | 50 |
| | 14 | 1 | 14 | 40 | 80 | 21 | 19 | 50 |
| Example | 15 | 1 | 15 | 40 | 80 | 21 | 19 | 50 |
| | 16 | 1 | 16 | 40 | 80 | 21 | 19 | 50 |
| | 17 | 1 | 17 | 40 | 80 | 21 | 19 | 50 |
| | 18 | 1 | 18 | 40 | 80 | 21 | 19 | 50 |
| | 19 | 1 | 19 | 40 | 80 | 21 | 19 | 50 |
| | 20 | 1 | 1 | 29 | 80 | 32 | 19 | 50 |
| | 21 | 1 | 1 | 30 | 80 | 31 | 19 | 50 |
| | 22 | 1 | 1 | 50 | 80 | 11 | 19 | 50 |
| | 23 | 1 | 1 | 51 | 80 | 10 | 19 | 50 |
| | 24 | 1 | 20 | 35 | 88 | 13 | 40 | 50 |
| | 25 | 1 | 21 | 35 | 88 | 15 | 38 | 50 |
| | 26 | 1 | 22 | 35 | 88 | 45 | 8 | 50 |
| | 27 | 1 | 23 | 35 | 88 | 47 | 6 | 50 |
| | 28 | 1 | 21 | 35 | 69 | 15 | 19 | 50 |
| | 29 | 1 | 21 | 35 | 70 | 15 | 20 | 50 |
| | 30 | 1 | 21 | 35 | 90 | 15 | 40 | 50 |

**Table 5-2: Evaluation conditions and evaluation results**

| | | Evaluation conditions | | | | | | |
|---|---|---|---|---|---|---|---|---|
| | | Recording head | Ink | Tᵢ (°C) | T_{fix} (°C) | T_{g}-Tᵢ (°C) | T_{fix}-T_{g} (°C) | Degree of decompression (kPa) |
| | 31 | 1 | 21 | 35 | 91 | 15 | 41 | 50 |
| | 32 | 1 | 21 | 41 | 80 | 9 | 30 | 50 |
| | 33 | 1 | 21 | 40 | 80 | 10 | 30 | 50 |
| | 34 | 1 | 22 | 30 | 80 | 50 | 5 | 50 |
| | 35 | 1 | 22 | 40 | 84 | 40 | 4 | 50 |
| | 36 | 1 | 22 | 40 | 85 | 40 | 5 | 50 |
| | 37 | 1 | 24 | 40 | 80 | 21 | 19 | 50 |
| | 38 | 1 | 25 | 40 | 80 | 21 | 19 | 50 |
| | 39 | 1 | 26 | 40 | 80 | 21 | 19 | 50 |
| | 40 | 1 | 27 | 40 | 80 | 21 | 19 | 50 |
| | 41 | 1 | 28 | 40 | 80 | 20 | 20 | 50 |
| | 42 | 1 | 29 | 40 | 80 | 24 | 16 | 50 |
| | 43 | 1 | 30 | 40 | 80 | 20 | 20 | 50 |
| | 44 | 1 | 31 | 40 | 80 | 18 | 22 | 50 |
| | 45 | 1 | 32 | 40 | 80 | 20 | 20 | 50 |
| | 46 | 1 | 33 | 40 | 80 | 21 | 19 | 50 |
| | 47 | 1 | 34 | 40 | 80 | 21 | 19 | 50 |
| Example | 48 | 1 | 35 | 40 | 80 | 19 | 21 | 50 |
| | 49 | 1 | 36 | 40 | 80 | 21 | 19 | 50 |
| | 50 | 1 | 37 | 40 | 80 | 20 | 20 | 50 |
| | 51 | 1 | 38 | 40 | 80 | 19 | 21 | 50 |
| | 52 | 1 | 39 | 40 | 80 | 23 | 17 | 50 |
| | 53 | 1 | 40 | 40 | 80 | 21 | 19 | 50 |
| | 54 | 1 | 41 | 40 | 80 | 22 | 18 | 50 |
| | 55 | 2 | 1 | 40 | 80 | 21 | 19 | 50 |
| | 56 | 3 | 1 | 40 | 80 | 21 | 19 | 50 |
| | 57 | 4 | 1 | 40 | 80 | 21 | 19 | 50 |
| | 58 | 5 | 1 | 40 | 80 | 21 | 19 | 50 |
| | 59 | 6 | 1 | 40 | 80 | 21 | 19 | 50 |
| | 60 | 7 | 1 | 40 | 80 | 21 | 19 | 50 |
| | 61 | 8 | 1 | 40 | 80 | 21 | 19 | 50 |
| | 62 | 9 | 1 | 40 | 80 | 21 | 19 | 50 |
| | 63 | 1 | 1 | 40 | 80 | 21 | 19 | 9 |
| | 64 | 1 | 1 | 40 | 80 | 21 | 19 | 10 |
| | 65 | 1 | 1 | 40 | 80 | 21 | 19 | 70 |

**Table 5-3: Evaluation conditions and evaluation results**

| | | Evaluation conditions | | | | | | |
|---|---|---|---|---|---|---|---|---|
| | | Recording head | Ink | Tᵢ (°C) | T_{fix} (°C) | T_{g}-Tᵢ (°C) | T_{fix}-T_{g} (°C) | Degree of decompression (kPa) |
| Comparative Example | 1 | 10 | 1 | 40 | 80 | 21 | 19 | - |
| | 2 | 1 | 42 | 40 | 80 | - | - | 50 |
| | 3 | 1 | 43 | 40 | 80 | - | - | 50 |
| | 4 | 1 | 1 | 40 | 25 | 21 | -36 | 50 |
| | 5 | 1 | 21 | 51 | 80 | -1 | 30 | 50 |
| | 6 | 1 | 1 | 40 | 60 | 21 | -1 | 50 |
| | 7 | 11 | 1 | 40 | 80 | 21 | 19 | - |
| | 8 | 11 | 42 | 40 | 80 | - | - | - |
| Reference Example | 1 | 11 | 42 | 40 | 80 | - | - | - |
| | 2 | 12 | 42 | 40 | 80 | - | - | 3 |
| | 3 | 13 | 42 | 40 | 80 | - | - | 30 |
| | 4 | 11 | 21 | 51 | 80 | -1 | 30 | 50 |
| | 5 | 11 | 1 | 40 | 60 | 21 | -1 | 50 |

**Table 5-4: Evaluation conditions and evaluation results**

| | | Evaluation results | | |
|---|---|---|---|---|
| | | Ejection stability | Abrasion resistance | Suction recovery property |
| | 1 | AA | A | A |
| | 2 | AA | A | A |
| | 3 | AA | A | A |
| | 4 | AA | A | A |
| | 5 | AA | A | A |
| | 6 | AA | A | A |
| | 7 | AA | A | A |
| | 8 | AA | A | A |
| | 9 | AA | A | A |
| | 10 | AA | A | A |
| | 11 | AA | A | A |
| | 12 | B | A | A |
| | 13 | A | A | A |
| | 14 | AA | A | A |
| Example | 15 | AA | A | A |
| | 16 | B | A | A |
| | 17 | A | A | A |
| | 18 | AA | A | A |
| | 19 | AA | A | A |
| | 20 | A | A | A |
| | 21 | AA | A | A |
| | 22 | AA | A | A |
| | 23 | A | A | A |
| | 24 | A | A | A |
| | 25 | AA | A | A |
| | 26 | AA | A | A |
| | 27 | AA | B | A |
| | 28 | AA | B | A |
| | 29 | AA | A | A |
| | 30 | AA | A | A |

**Table 5-5: Evaluation conditions and evaluation results**

| | | Evaluation results | | |
|---|---|---|---|---|
| | | Ejection stability | Abrasion resistance | Suction recovery property |
| | 31 | AA | B | A |
| | 32 | A | A | A |
| | 33 | AA | A | A |
| | 34 | AA | A | A |
| | 35 | AA | B | A |
| | 36 | AA | A | A |
| | 37 | AA | B | A |
| | 38 | AA | A | A |
| | 39 | AA | A | A |
| | 40 | A | A | A |
| | 41 | B | A | A |
| | 42 | B | A | A |
| | 43 | B | A | A |
| | 44 | A | A | A |
| | 45 | AA | A | A |
| | 46 | AA | A | A |
| | 47 | AA | B | A |
| Example | 48 | B | A | A |
| | 49 | A | A | A |
| | 50 | AA | A | A |
| | 51 | AA | A | A |
| | 52 | AA | B | A |
| | 53 | AA | A | A |
| | 54 | A | A | A |
| | 55 | A | A | A |
| | 56 | AA | A | A |
| | 57 | A | A | A |
| | 58 | A | A | A |
| | 59 | AA | A | A |
| | 60 | A | A | A |
| | 61 | A | A | A |
| | 62 | A | A | A |
| | 63 | A | A | A |
| | 64 | AA | A | A |
| | 65 | AA | A | A |

**Table 5-6: Evaluation conditions and evaluation results**

| | | Evaluation results | | |
|---|---|---|---|---|
| | | Ejection stability | Abrasion resistance | Suction recovery property |
| Comparative Example | 1 | - | A | C |
| | 2 | AA | C | A |
| | 3 | AA | C | A |
| | 4 | AA | C | A |
| | 5 | C | A | A |
| | 6 | AA | C | A |
| | 7 | - | A | C |
| | 8 | - | C | A |
| Reference Example | 1 | AA | C | A |
| | 2 | C | C | A |
| | 3 | C | C | A |
| | 4 | AA | A | A |
| | 5 | AA | A | A |

In Reference Example 1, the ejection stability and the suction recovery property were excellent, but the apparatus was increased in size.

Various embodiments have been described in detail above but it will be understood that the present disclosure is not limited to these embodiments and encompasses all modifications, variants, alternatives and equivalents falling within the scope of the appended claims.

## Claims

1. An ink jet recording method using an ink jet recording apparatus comprising a recording head (1),
the recording head (1) comprising:
an ejection orifice (13) configured to eject an aqueous ink;
a pressure chamber (12) communicating to the ejection orifice (13);
an ejection element arranged in the pressure chamber (12), the ejection element being configured to generate energy for ejecting the aqueous ink from the ejection orifice (13);
a liquid retention chamber configured to supply the aqueous ink to the pressure chamber (12);
a bubble retention chamber (520) communicating to the liquid retention chamber, the bubble retention chamber (520) being configured to hold a bubble therein;
a decompression chamber (760) arranged adjacent to the bubble retention chamber (520), the decompression chamber (760) being configured to decompress an inside thereof; and
a gas permeable membrane (710) arranged at a boundary between the bubble retention chamber (520) and the decompression chamber (760),
the ink jet recording method comprising:
applying the aqueous ink ejected from the ejection orifice (13) to a recording medium (P) to record an image; and then
heating the recording medium (P),
wherein the aqueous ink comprises a resin particle, and
wherein a glass transition temperature T_{g} (°C) of the resin particle, a maximum temperature Tᵢ (°C) of the aqueous ink in the bubble retention chamber and a heating temperature T_{fix} (°C) of the recording medium in the heating satisfy a relationship of the following formula (1); ${T}_{i} < {T}_{g} \leq {T}_{fix}$

2. The ink jet recording method according to claim 1, wherein the aqueous ink further comprises a pigment.

3. The ink jet recording method according to claim 2, wherein a content (% by mass) of the pigment in the aqueous ink is 0.10 times or more in terms of mass ratio with respect to a content (% by mass) of the resin particle therein.

4. The ink jet recording method according to any one of claims 1 to 3, wherein the aqueous ink further comprises a nonionic surfactant.

5. The ink jet recording method according to claim 4, wherein a content (% by mass) of the nonionic surfactant in the aqueous ink is 0.10 times or more in terms of mass ratio with respect to a content (% by mass) of the resin particle therein.

6. The ink jet recording method according to any one of claims 1 to 5, wherein the maximum temperature Tᵢ (°C) of the aqueous ink in the bubble retention chamber is 30°C or more to 50°C or less.

7. The ink jet recording method according to any one of claims 1 to 6, wherein the glass transition temperature T_{g} (°C) of the resin particle is 50°C or more to 80°C or less.

8. The ink jet recording method according to any one of claims 1 to 7, wherein the heating temperature T_{fix} (°C) of the recording medium in the heating is 70°C or more to 90°C or less.

9. The ink jet recording method according to any one of claims 1 to 8, wherein the glass transition temperature T_{g} (°C) of the resin particle and the maximum temperature Tᵢ (°C) of the aqueous ink in the bubble retention chamber satisfy a relationship of the following formula (2); ${T}_{g} - {T}_{i} \geq 10$

10. The ink jet recording method according to any one of claims 1 to 9, wherein the glass transition temperature T_{g} (°C) of the resin particle and the heating temperature T_{fix} (°C) of the recording medium in the heating satisfy a relationship of the following formula (3); ${T}_{fix} - {T}_{g} \geq 5$

11. The ink jet recording method according to any one of claims 1 to 10, wherein a content (% by mass) of the resin particle in the aqueous ink is 6.00% by mass or more to 15.00% by mass or less with respect to a total mass of the ink.

12. The ink jet recording method according to any one of claims 1 to 11, wherein a resin constituting the resin particle comprises an acrylic resin.

13. The ink jet recording method according to any one of claims 1 to 12, wherein the resin particle has an anionic group.

14. The ink jet recording method according to any one of claims 1 to 13, wherein an amount of an anionic group of the resin particle is 50 µmol/g or more to 200 µmol/g or less.

15. The ink jet recording method according to any one of claims 1 to 14, wherein a resin constituting the resin particle has a cross-linked structure.

16. The ink jet recording method according to claim 15,
wherein the resin comprises a cross-linking unit derived from a cross-linkable monomer, and
wherein a content (% by mass) of the cross-linking unit in the resin is 0.5% by mass or more to 3.0% by mass or less with respect to a total mass of the resin.

17. The inkjet recording method according to claim 16, wherein the cross-linkable monomer is at least one kind selected from the group consisting of: ethylene glycol di(meth)acrylate; diethylene glycol di(meth)acrylate; triethylene glycol di(meth)acrylate; polyethylene glycol di(meth)acrylate; propylene glycol di(meth)acrylate; dipropylene glycol di(meth)acrylate; tripropylene glycol di(meth)acrylate; and polypropylene glycol di(meth)acrylate.

18. The ink jet recording method according to any one of claims 1 to 17, wherein the decompression chamber is arranged adjacent to an upper side in a vertical direction of the bubble retention chamber.

19. The ink jet recording method according to any one of claims 1 to 18, wherein the gas permeable membrane has a thickness of 0.10 mm or less.

20. The ink jet recording method according to any one of claims 1 to 19, wherein the gas permeable membrane has a thickness of 0.01 mm or more.

21. The ink jet recording method according to any one of claims 1 to 20, wherein a material for the gas permeable membrane is polypropylene.

22. The ink jet recording method according to any one of claims 1 to 21, wherein the decompression chamber has a decompression degree of 10 kPa or more.

23. An ink jet recording apparatus to be used in an ink jet recording method using the ink jet recording apparatus comprising a recording head (1),
the recording head (1) comprising:
an ejection orifice (13) configured to eject an aqueous ink;
a pressure chamber (12) communicating to the ejection orifice (13);
an ejection element arranged in the pressure chamber (12), the ejection element being configured to generate energy for ejecting the aqueous ink from the ejection orifice (13);
a liquid retention chamber configured to supply the aqueous ink to the pressure chamber (12);
a bubble retention chamber (520) communicating to the liquid retention chamber, the bubble retention chamber (520) being configured to hold a bubble therein;
a decompression chamber (760) arranged adjacent to the bubble retention chamber (520), the decompression chamber (760) being configured to decompress an inside thereof; and
a gas permeable membrane (710) arranged at a boundary between the bubble retention chamber (520) and the decompression chamber (760),
the ink jet recording method comprising:
applying the aqueous ink ejected from the ejection orifice (13) to a recording medium (P) to record an image; and then
heating the recording medium (P),
wherein the aqueous ink comprises a resin particle, and
wherein a glass transition temperature T_{g} (°C) of the resin particle, a maximum temperature Tᵢ (°C) of the aqueous ink in the bubble retention chamber and a heating temperature T_{fix} (°C) of the recording medium in the heating satisfy a relationship of the following formula (1); ${T}_{i} < {T}_{g} \leq {T}_{fix}$

24. An aqueous ink to be used in an ink jet recording method using an ink jet recording apparatus comprising a recording head (1),
the recording head (1) comprising:
an ejection orifice (13) configured to eject the aqueous ink;
a pressure chamber (12) communicating to the ejection orifice (13);
an ejection element arranged in the pressure chamber (12), the ejection element being configured to generate energy for ejecting the aqueous ink from the ejection orifice (13);
a liquid retention chamber configured to supply the aqueous ink to the pressure chamber (12);
a bubble retention chamber (520) communicating to the liquid retention chamber, the bubble retention chamber (520) being configured to hold a bubble therein;
a decompression chamber (760) arranged adjacent to the bubble retention chamber (520), the decompression chamber (760) being configured to decompress an inside thereof; and
a gas permeable membrane (710) arranged at a boundary between the bubble retention chamber (520) and the decompression chamber (760),
the ink jet recording method comprising:
applying the aqueous ink ejected from the ejection orifice (13) to a recording medium (P) to record an image; and then
heating the recording medium (P),
wherein the aqueous ink comprises a resin particle, and
wherein a glass transition temperature T_{g} (°C) of the resin particle, a maximum temperature Tᵢ (°C) of the aqueous ink in the bubble retention chamber and a heating temperature T_{fix} (°C) of the recording medium in the heating satisfy a relationship of the following formula (1); ${T}_{i} < {T}_{g} \leq {T}_{fix}$
